# EUROPEAN PATENT APPLICATION

(11) **EP 1 796 350 A1**
(43) Date of publication of application: **13.06.2007**
(21) Application number: 05787707.8
(22) Date of filing: 28.09.2005
(51) Int. Cl.: H04M 1/02

(54) **MOBILE INFORMATION TERMINAL**

(30) Priority: 01.10.2004 JP 2004290256
(71) Applicant: SHARP KABUSHIKI KAISHA, Osaka-shi, Osaka 545-8522 (JP)
(72) Inventor: OHKI, Kunihiro, 6190238 (JP); TAKATA, Hidenori, 7370915 (JP); KOYAMA, Keiichi, 6310022 (JP); FUKUSADA, Ryohsuke, 5470026 (JP)
(74) Representative: Brown, Kenneth Richard
(86) International application number: PCT/JP2005/017797
(87) International publication number: WO 2006/038499

(57) **Abstract**

A mobile information terminal (10) includes a first case (1) having an operation unit (11), a second case (2) having a display unit (21) and is partially overlapped on the first case (1), and a rotary connection mechanism (3) for connecting the first and the second case in such a manner that the second case (2) can be rotated relatively to the first case (1). The center of rotation is substantially identical to the center of the overlap portion (4) of the first and the second case.

## Description

### Technical Field

The present invention relates to a portable information terminal, and more particularly relates to a portable information terminal capable of displaying videos.

### Background Art

Conventionally, portable information terminals are disclosed in, for example, Japanese Patent Laying-Open No. 2004-54409 (Patent Document 1), Japanese Patent Laying-Open No. 2003-174495 (Patent Document 2), Japanese Patent Laying-Open No. 2003-244303 (Patent Document 3), and Japanese Utility Model Registration Publication No. 3088157 (Patent Document 4).

Patent Document 1: Japanese Patent Laying-Open No. 2004-54409

Patent Document 2: Japanese Patent Laying-Open No. 2003-174495

Patent Document 3: Japanese Patent Laying-Open No. 2003-244303

Patent Document 4: Japanese Utility Model Registration No. 3088157

### Disclosure of the Invention

### Problems to be Solved by the Invention

Conventional techniques have a problem of a large size in combination of a display portion and a main body.

Also, conventional techniques have provided information terminals hard to hold in using them as mobile tools and, thus, have s problem of poor usability.

Furthermore, conventional portable information terminals have a problem of difficulty in mounting a larger-sized camera unit therein.

Therefore, the present invention was made to overcome the aforementioned problems.

It is an object of the present invention to reduce an entire size of a portable information terminal in a state of having an L-shape enabling to view on a horizontally-longer screen as well as improving holdability thereof

It is another object of the present invention to increase usability of a portable information terminal as a "portable tool" for use in a mobile environment.

It is further an object of the present invention to provide a portable information terminal capable of realizing a slidable configuration while mounting a large-sized camera unit (a lens component having high performance).

### Means for Solving the Problems

A portable information terminal according to a single aspect of the present invention includes a first cabinet having an operation portion; a second cabinet having a display portion and being partially overlapped with the first cabinet; and a rotational coupling mechanism which couples the first and second cabinets to each other such that the second cabinet can be rotated with respect to the first cabinet. The center of the rotation is substantially coincident with the center of the overlapped portions of the first and second cabinets.

With the portable information terminal having the aforementioned configuration, the center of the rotation is substantially coincident with the center of the overlapped portions of the first and second cabinets, which can reduce the entire size at an L-shape state, in comparison with cases where the center of the rotation is not coincident with the center of the overlapped portions. This can reduce the area of the display portion which is not covered with the palm and also can reduce the entire size thereof. Also, this can improve the style thereof at usage states.

A portable information terminal according to another aspect of the present invention includes a first cabinet having an operation portion; a second cabinet having a display portion and being partially overlapped with the first cabinet; and a rotational coupling mechanism which couples the first and second cabinets to each other such that the second cabinet can be rotated with respect to the first cabinet. The second cabinet has an operation key which is placed on the first cabinet and is for selecting display items on the display portion.

With the portable information terminal having the aforementioned configuration, the operation key for selecting display items on the display is placed on the first cabinet. Therefore, when an operator operates the operation key provided on the second cabinet with his or her thumb while holding the first cabinet, the operator is not required to apply forces to the thumb forcedly, which increases the degree of its freedom, thereby improving the usability. Furthermore, this can improve the appearance of the hand.

A portable information terminal according to a different aspect of the present invention includes a first cabinet having an operation portion; a second cabinet having a display portion and being partially overlapped with the first cabinet; and a rotational coupling mechanism which couples the first and second cabinets to each other such that the second cabinet can be slid and rotated with respect to the first cabinet.

The portable information terminal having the aforementioned configuration is slidable. Accordingly, by sliding it vertically at first, it is possible to ensure a screen with a vertically-longer shape having a higher frequency of usage, being advantageous for making conversations and sending and receiving e-mails and having excellent usability conventionally. This results in improved usability.

A portable information terminal according to a different aspect of the present invention includes a first cabinet having an operation portion; a second cabinet having a display portion and being partially overlapped with the first cabinet; a rotational coupling mechanism which couples the first and second cabinets to each other such that the second cabinet can be rotated with respect to the first cabinet; and a strap portion provided on at least one of the first and second cabinets on the surface opposite to the display portion. The strap portion engages with a hand of an operator, in a state where the operator grasps the portable information terminal, and the strap portion comes into contact with a placement surface for supporting the portable information terminal, in a state where the portable information terminal is placed on the placement surface.

With the portable information terminal having the aforementioned configuration, it is possible to weaken the grasping force since the strap portion is used, thus resulting in reduction of the fatigue. Furthermore, the portable information terminal is less prone to be fallen even if the palm is opened, which can prevent the occurrence of corruption and damages thereof. This results in improvement of the usability of the portable information terminal as a "portable tool" for use in a mobile environment.

A portable information terminal according to an another aspect of the present invention includes a first cabinet having an operation portion; a second cabinet having a display portion and being partially overlapped with the first cabinet; a rotational coupling mechanism for coupling the first and second cabinets to each other such that the second cabinet can be rotated with respect to the first cabinet; stereo speakers provided in the second cabinet on opposite sides of the display portion; and a replaying portion for changing over a stereo replaying condition of the stereo speakers according to a state of display of images on the display portion.

With the portable information terminal having the aforementioned configuration, the control portion changes over the stereo replaying state of the speakers, according to the state of display of images on the display portion, which enables replaying according to the state of the display anytime. This can provide a portable information terminal with improved usability.

A portable information terminal according to an another aspect of the present invention includes a first cabinet having an operation portion; a second cabinet having a display portion and being partially overlapped with the first cabinet; a rotational coupling mechanism which couples the first and second cabinets to each other such that the second cabinet can be rotated with respect to the first cabinet; and an image pickup portion which has substantially the same thickness as the sum of the thicknesses of the first and second cabinets being overlapped with each other and is housed in the second cabinet.

With the portable information terminal having the aforementioned configuration, the image pickup portion having substantially the same thickness as the sum of the thicknesses of the overlapped first and second cabinets is housed in the second cabinet, which enables mounting a large-sized camera lens therein. This results in realization of a lens structure without any constraint on the size of the image pickup portion.

A portable information terminal according to a different aspect of the present invention includes a first cabinet having a first surface and a second surface positioned on a side opposite to the first surface; a second cabinet having a third surface and a fourth surface positioned on a side opposite to the third surface and being partially overlapped with the first cabinet; a first rotational coupling mechanism which holds the second cabinet, such that the second cabinet can be rotated with respect to the first cabinet; and a second rotational coupling mechanism which couples the first rotational coupling mechanism to the first cabinet, such that the first rotational coupling mechanism can be rotated with respect to the first cabinet. The first rotational coupling mechanism holds the second cabinet such that the third surface and the fourth surface can be faced to the first surface.

With the portable information terminal having the aforementioned configuration, the first rotational mechanism holds the first cabinet such that the third surface and the fourth surface can be faced to the first surface, which enables housing the portable information terminal with any one of the third surface and the fourth surface which requires protection faced to the first surface. This results in provision of a portable information terminal with improved usability.

More specifically, the second cabinet can be rotated in a first direction and a second direction different from the first direction, from the state where the first and second cabinets are arranged along a single straight line.

More specifically, the portable information terminal is capable of receiving ground-wave digital broadcasting and displaying it on the display portion.

### Effects of the Invention

According to the present invention, there is provided a portable information terminal capable of reducing its entire size.

According to the present invention, there is provided a portable information terminal having improved usability.

According to the present invention, there is provided a portable information terminal capable of mounting a larger-sized image pickup portion.

### Brief Description of the Drawings

Fig. 1 is a schematic plan view of a portable information terminal according to a first embodiment of the present invention.
Fig. 2 is a plan view of a conventional portable information terminal.
Fig. 3 is a perspective view of the portable information terminal at a usage state, according to the first embodiment of the present invention.
Fig. 4 is a perspective view of the portable information terminal, according to the first embodiment of the present invention.
Fig. 5 is a perspective view of the portable information terminal according to the first embodiment of the present invention, illustrating a second cabinet which has been slid.
Fig. 6 is a perspective view of the portable information terminal according to the first embodiment of the present invention, illustrating the second cabinet which has been rotated by 90 degree in a direction.
Fig. 7 is a perspective view of the portable information terminal having the second cabinet which has been rotated in the direction opposite to the direction illustrated in Fig. 5, according to the first embodiment of the present invention.
Fig. 8 is a perspective view of a first cabinet for describing a rotational coupling mechanism.
Fig. 9 is a perspective view of the second cabinet for describing the rotational coupling mechanism.
Fig. 10 is a cross-sectional view of the portable information terminal having the combination of the first cabinet and the second cabinet, taken along the line X-X in Fig. 8.
Fig. 11 is a perspective view of a rotation shaft.
Fig. 12 is a perspective view of the rotation shaft according to another aspect.
Fig. 13 is a plan view of a slot.
Fig. 14 is a plan view of the slot according to another aspect.
Fig. 15 is a view illustrating wirings within the portable information terminal.
Fig. 16 is a view illustrating wirings within the portable information terminal.
Fig. 17 is an exploded perspective view of the portable information terminal.
Fig. 18 is a view for describing the rotational coupling mechanism.
Fig. 19 is a view for describing the rotational coupling mechanism, taken along the line XIX-XIX in Fig. 18.
Fig. 20 is a view for describing the rotational coupling mechanism.
Fig. 21 is a view for describing the rotational coupling mechanism, taken along the line XXI-XXI in Fig. 20.
Fig. 22 is a view for describing the rotational coupling mechanism.
Fig. 23 is a view illustrating the rotational coupling mechanism, according to another aspect.
Fig. 24 is a view illustrating the rotational coupling mechanism, according to a different aspect.
Fig. 25 is a view illustrating the rotational coupling mechanism, according to a different aspect.
Fig. 26 is a view illustrating the rotational coupling mechanism, according to a different aspect.
Fig. 27 is a circuit block diagram illustrating a portion of the electric circuit portion of the portable information terminal according to the first embodiment.
Fig. 28 is a perspective view of a portable information terminal, according to a second embodiment of the present invention.
Fig. 29 is a side view of the portable information terminal, which is viewed in the direction designated by an arrow XXIX in Fig. 28.
Fig. 30 is a rear view of the portable information terminal, which is viewed in the direction designated by an arrow XXX in Fig. 29.
Fig. 31 is a perspective view illustrating the portable information terminal being at a usage state, according to the second embodiment.
Fig. 32 is a front view of a portable information terminal according to a third embodiment of the present invention.
Fig. 33 is a plan view of the portable information terminal when viewed in the direction designated by an arrow XXXIII in Fig. 32.
Fig. 34 is a bottom view of the portable information terminal when viewed in the direction designated by an arrow XXXIV in Fig. 32.
Fig. 35 is a side view of the portable information terminal when viewed in the direction designated by an arrow XXXV in Fig. 32.
Fig. 36 is a rear side view of the portable information terminal, which is viewed in the direction designated by an arrow XXXVI in Fig. 35.
Fig. 37 is a cross-sectional view taken along the line XXXVII-XXXVII in Fig. 32.
Fig. 38 is a front view of the portable information terminal being in a state where the operation portion is closed.
Fig. 39 is a plan view of the portable information terminal, which is viewed in the direction designated by an arrow XXXIX in Fig. 38.
Fig. 40 is a side view of the portable information terminal, which is viewed in the direction designated by an arrow XL in Fig. 38.
Fig. 41 is a perspective view illustrating a method for operating the portable information terminal according to the third embodiment of the present invention.
Fig. 42 is a perspective view illustrating a method for operating the portable information terminal according to the third embodiment of the present invention.
Fig. 43 is a perspective view illustrating a method for operating the portable information terminal according to the third embodiment of the present invention.
Fig. 44 is a perspective view illustrating a method for operating the portable information terminal according to the third embodiment of the present invention.
Fig. 45 is a perspective view illustrating a method for operating the portable information terminal according to the third embodiment of the present invention.
Fig. 46 is a rear view of a portable information terminal according to a fourth embodiment of the present invention.
Fig. 47 is a front view of the portable information terminal when it is used for shooting with a vertically longer composition.
Fig. 48 is a view of the portable information terminal when it is used for shooting with a horizontally longer composition.
Fig. 49 is a perspective view of a portable information terminal, according to a fourth embodiment of the present invention.
Fig. 50 is a front view of the portable information terminal, in the case of shooting an image in a state where it folded.
Fig. 51 is a front view of the portable information terminal, in the case of shooting an image in a state where it folded.
Fig. 52 is a front view of the portable information terminal, in the case of performing live coverage while shooting an object.
Fig. 53 is a front view of the portable information terminal being folded.
Fig. 54 is a front view of the portable information terminal being folded.
Fig. 55 is a front view of a portable information terminal according to a fifth embodiment of the present invention.
Fig. 56 is a front view of the portable information terminal in a state where it has a vertically longer shape, according to the fifth embodiment.
Fig. 57 is a front view of the portable information terminal, in a state where the second cabinet has been slid from the position illustrated in Fig. 56.
Fig. 58 is a front view of the portable information terminal being folded.
Fig. 59 is a front view of the portable information terminal being folded.
Fig. 60 is a front view of the portable information terminal according to the fifth embodiment of the present invention.
Fig. 61 is a front view of the portable information terminal being folded.
Fig. 62 is a front view of the portable information terminal, when the second cabinet has been slid with respect to the first cabinet.
Fig. 63 is a front view of the portable information terminal being folded.
Fig. 64 is a front view of the portable information terminal being folded.
Fig. 65 is a front view of a portable information terminal according to the fifth embodiment.
Fig. 66 is a front view of the portable information terminal according to the fifth embodiment.
Fig. 67 is a front view of the portable information terminal, in a state where the second cabinet has been slid with respect to the first cabinet.
Fig. 68 is a front view of the portable information terminal being folded.
Fig. 69 is a front view of the portable information terminal being folded.
Fig. 70 is a perspective view of a portable information terminal according to a sixth embodiment of the present invention.
Fig. 71 is a cross-sectional view taken along the line LXXI-LXXI in Fig. 70.
Fig. 72 is a front view of the portable information terminal which is viewed in the direction designated by an arrow LXXII in Fig. 70.
Fig. 73 is a rear view of the portable information terminal which is viewed in the direction designated by an arrow LXXIII in Fig. 70.
Fig. 74 is a front view of the portable information terminal which is viewed in the direction designated by an arrow LXXIV in Fig. 70.
Fig. 75 is a bottom view of the portable information terminal which is viewed in the direction designated by an arrow LXXV in Fig. 70.
Fig. 76 is a side view of the portable information terminal which is viewed in the direction designated by an arrow LXXVI in Fig. 70.
Fig. 77 is a perspective view of the portable information terminal according to the sixth embodiment of the present invention.
Fig. 78 is a side view of the portable information terminal, when viewed in the direction designated by an arrow LXXVIII in Fig. 77.
Fig. 79 is a perspective view of the portable information terminal being folded.
Fig. 80 is a front view of the portable information terminal which is viewed in the direction designated by an arrow LXXX in Fig. 70.
Fig. 81 is a cross-sectional view taken along the line LXXXI-LXXXI in Fig. 80.
Fig. 82 is a rear view of the portable information terminal which is viewed in the direction designated by an arrow LXXXII in Fig. 79.
Fig. 83 is a plan view of the portable information terminal which is viewed in the direction designated by an arrow LXXXIII in Fig. 79.
Fig. 84 is a side view of the portable information terminal which is viewed in the direction designated by an arrow LXXXIV in Fig. 79.
Fig. 85 is a side view of the portable information terminal which is viewed in the direction designated by an arrow LXXXV in Fig. 79.
Fig. 86 is a perspective view of the portable information terminal in a state where the cover is closed.
Fig. 87 is a front view of the portable information terminal which is viewed in the direction designated by an arrow LXXXVII in Fig. 86.
Fig. 88 is a rear view of the portable information terminal which is viewed in the direction designated by an arrow LXXXVIII in Fig. 86.
Fig. 89 is a plan view of the portable information terminal which is viewed in the direction designated by an arrow LXXXIX in Fig. 86.
Fig. 90 is a bottom view of the portable information terminal which is viewed in the direction designated by an arrow XC in Fig. 86.
Fig. 91 is a side view of the portable information terminal which is viewed in the direction designated by an arrow XCI in Fig. 86.
Fig. 92 is a perspective view of the portable information terminal, at a first usage state.
Fig. 93 is a perspective view of the portable information terminal, at a second usage state.
Fig. 94 is a perspective view of the portable information terminal, at a third usage state.

### Description of the Reference Signs

1: first cabinet, 2: second cabinet, 3: rotational coupling mechanism, 4: overlapped portion, 10: portable information terminal, 11: operation portion, and 21: display portion.

### Best Modes for Carrying Out the Invention

Hereinafter, with reference to the drawings, there will be described embodiments of the present invention. In the following description, the same or corresponding components will be designated by the same reference characters and will not be described redundantly.

### (First Embodiment)

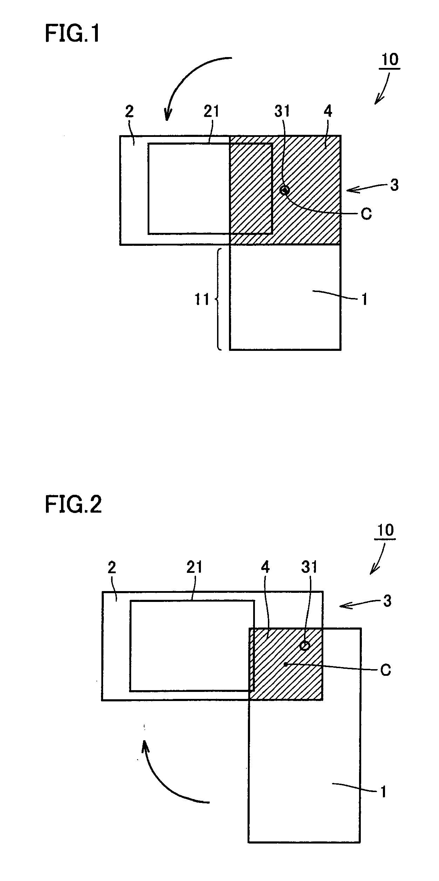

Fig. 1 is a schematic plan view of a portable information terminal according to a first embodiment of the invention. Referring to Fig. 1, a portable information terminal 10 according to the first embodiment of the present invention includes a first cabinet 1 having an operation portion 11, a second cabinet 2 which has a display portion 21 and is partially overlapped with first cabinet 1, and a rotational coupling mechanism 3 which couples first and second cabinets 1 and 2 such that second cabinet 2 is rotatable with respect to first cabinet 1. A rotation shaft 31 which is the center of the rotation is substantially coincident with the center C of the overlapped portions 4 of first and second cabinets 1 and 2.

Second cabinet 2 is attached to first cabinet 1 through rotational coupling mechanism 3. Second cabinet 2 can be rotated about rotation shaft 31 and can be arranged in an "L" shape as illustrated in Fig. 1 and along a single straight line. Also, the entire area of second cabinet 2 can cover first cabinet 1.

Second cabinet 21 has display portion 21 capable of displaying character information, image information and the like. As display portion 21, it is possible to employ a liquid crystal display, an organic electroluminescence display, and the like.

Rotational coupling mechanism 3 has rotation shaft 31, and second cabinet 2 can be rotated about rotation shaft 31 1 with respect to first cabinet 1. In the first embodiment, the overlapped areas of the two cabinets (the areas designated by diagonal lines in Fig. 1) are made to have smallest possible size. This can reduce the entire size.

Fig. 2 is a plan view of a conventional portable information terminal. In the conventional portable information terminal 10, a rotation shaft 31 as a rotation center is deviated from the center C of overlapped portions 4. This increases the entire size, thereby making it impossible to compact it.

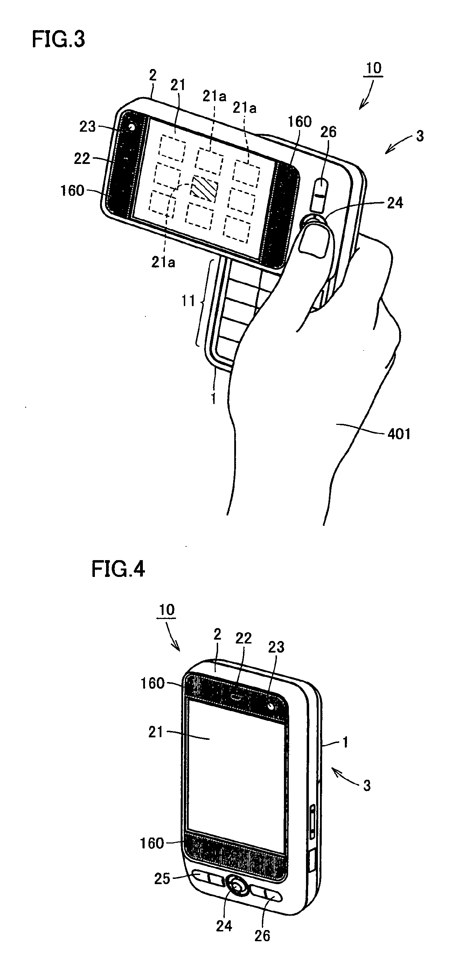

Fig. 3 is a perspective view illustrating a usage state of the portable information terminal according to the first embodiment of the present invention. Referring to Fig. 3, portable information terminal 10 according to the first embodiment of the present invention includes first cabinet 1 having operation portion 11, second cabinet 2 which has display portion 21 and is partially overlapped with first cabinet 1, and rotational coupling mechanism 3 which couples first and second cabinets 1 and 2 to each other such that second cabinet 2 can be rotated with respect to first cabinet 1. Second cabinet 3 has an operation key 24 placed near first cabinet 1, the operation key 24 being for use in selecting displayed items 21 a on display portion 21.

First cabinet 11 has a rectangular parallelepiped shape having rounded corner portions. In first cabinet 1, operation portion 11 is a switch constituted by ten keys, wherein there is no particular limitation of the number of them. Also, operation portion 11 can be constituted by a touch panel which utilizes surface acoustic waves, instead of push switches.

Second cabinet 2 is held by rotational coupling mechanism 3 such that it is slidable and rotatable with respect to first cabinet 1. While, in Fig. 3, second cabinet 2 is positioned such that portable information terminal 1 has an "L" shape, the position of second cabinet 2 is not limited thereto, but second cabinet 2 can be rotated with respect to first cabinet 1. Display portion 21 is provided at the center portion of second cabinet 2. Display portion 21 liquid-crystal displays information received by portable information terminal 10, information incorporated in portable information terminal 10 and the like. Display portion 21 has a horizontally longer screen in Fig. 3, but the shape of the screen is not limited thereto, and the display portion 21 can have a square screen. Also, display portion 21 can have an elliptical display surface having rounded corner portions.

Display portion 21 displays plural display items 21a. There is no particular limitation on the contents of display items 21 a, but display portion 21 can display display items indicating mail functions, camera functions, history functions and the like, such that any of these display items can be selected through operation key 24 and the display content thereof can be selected by pushing operation key 24 after selecting the predetermined display item 21a.

On the opposite sides of display portion 21, there are placed speaker portions 160. Speaker portions 160 have the function of replaying sounds and, thus, generate sounds corresponding to images being displayed on display portion 21. Since speaker portions 160 exist on the opposite sides of display portion 21, speaker portions 160 can be provided with stereo functions. Also, for electric power saving, it is possible to drive only one of the right and left speaker portions 160.

Speakers 22 are provided in speaker portions 160. Speakers 22 are mechanisms for transferring voices of a conversation partner to a user (operator) and play a role in transferring sounds.

A camera 23 is placed on a side of a speaker 22. Camera 23 has the function of shooting the operator in the case where portable information terminal 10 is utilized as a videophone. The position of camera 23 is not limited to that illustrated in Fig. 3, but can be at any portion of speaker portions 160.

Operation key 24 is provided at a portion of second cabinet 2 near first cabinet 1. Operation key 24 is constituted by a combination of a cross key and a push key, for example. In this case, a necessary display item 21 a can be selected through the cross key and the selection of its function can be confirmed through the push key. Also, operation key 24 can be constituted by only a cross key, and the confirmation can be made through a switch 26. Also, operation key 24 can be constituted by various switches such as a scroll switch, a track ball and the like. In order to allow operator 401 to operate operation key 24 easily, operation key 24 is provided near first cabinet 1. While, in Fig. 3, operator 401 can push operation key 24 with his or her right hand, second cabinet 2 can be rotated in the opposite direction for positioning operation key 24 on the left-hand side, which enables operator 401 to push operation key 24 with his or her left hand.

Fig. 4 is a perspective view of the portable information terminal according to the first embodiment of the present invention. Referring to Fig. 4, portable information terminal 10 includes first and second cabinets 1 and 2 which have substantially rectangular parallelepiped shapes and can overlap with each other, and rotational coupling mechanism 3 capable of coupling first cabinet 1 and second cabinet 2 to each other and sliding and rotating second cabinet 2 with respect to first cabinet 1. Second cabinet 2 has a shape extending longitudinally, and operation key 24 is placed at the lower end portion thereof while speaker 22 is placed at the upper end portion thereof. The position of operation key 24 is not limited to the vicinity of a shorter side of second cabinet 2 as illustrated in Fig. 4, but operation key 24 can be provided near a longer side thereof. Also, operation key 24 can be placed in speaker portions 160.

On the opposite sides of operation key 24, there are provided switches 25 and 26. Switches 25 and 26 have the function of confirming selection of items which has been made through operation key 24. Also, switches 25 and 26 are not limited thereto, but switches 25 and 26 can be switches for selecting specific functions. For example, switch 25 can be adapted to be pushed for receiving ground wave digital broadcasting, while switch 26 can be adapted to be pushed for activating mail functions.

Further, multi-function switches can be substituted for switches 25 and 26.

As illustrated in Fig. 4, no antenna appears on the surface of portable information terminal 10. In the case of using portable information terminal 1 as a portable information terminal having no antenna, such as an electronic notebook, there is no need for an antenna. On the contrary, in the case of using portable information terminal 10 as an apparatus for transmitting and receiving information through radio waves to and from the outside, for example, in the case of using portable information terminal 10 as a portable phone, a television receiver or the like, portable information terminal 10 is provided with an antenna. In this case, the antenna can be embedded in any of first cabinet 1 and second cabinet 2. Also, the antenna can be attached to portable information terminal 10 so as to protrude outwardly.

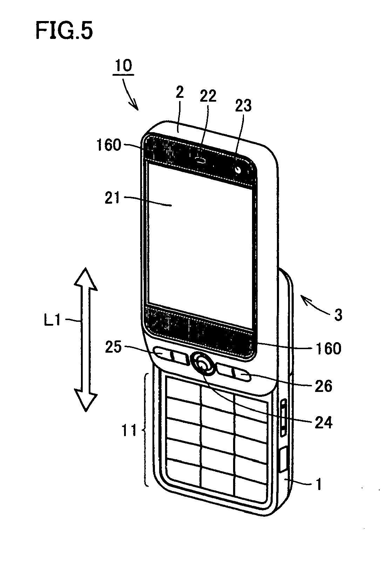

Fig. 5 is a perspective view of the portable information terminal, illustrating the second cabinet being slid. Referring to Fig. 5, second cabinet 2 can be slid in the direction illustrated by an arrow L1 with respect to first cabinet 1. By sliding second cabinet 2 with respect to first cabinet 1, operation portion 11 in first cabinet 1 is exposed. There is no particular limitation on the aspect of the sliding thereof, but second cabinet 2 can be slid to the position illustrated in Fig. 5 at a time. Also, unlike this, second cabinet 2 can be slid with respect to first cabinet 1 in steps. Further, as a sliding method, it is possible to employ various methods, such as manual, electrical and other methods.

Rotational coupling mechanism 3 holds second cabinet 2 slidably with respect to first cabinet 1. Once second cabinet 2 is slid by a predetermined amount, rotational coupling mechanism 3 holds second cabinet 2 so as not to be slid any more.

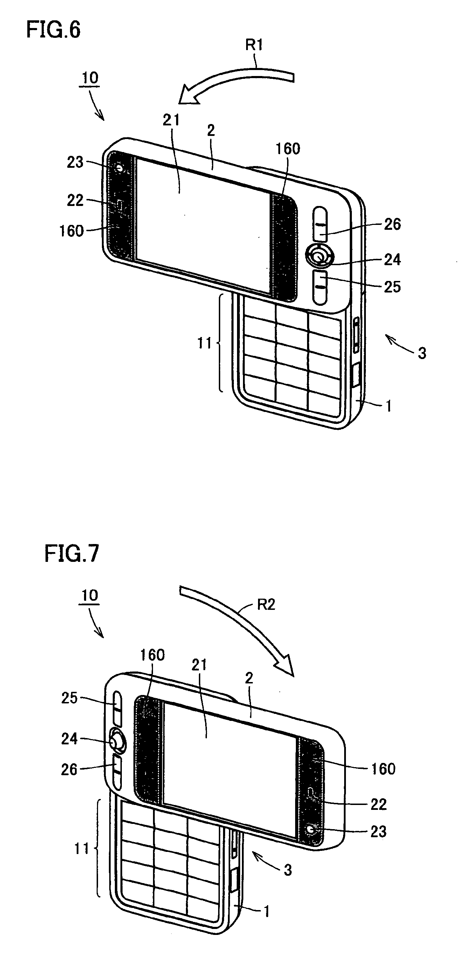

Fig. 6 is a perspective view of the portable information terminal having the second cabinet which has been rotated by 90 degree in a certain direction. Referring to Fig. 6, second cabinet 2 of portable information terminal 10 can be rotated in the direction designated by an arrow R1 (a first direction). At this time, the center of the overlapped portions resulted from the rotation is substantially coincident with the rotation shaft. If second cabinet 2 is rotated, this causes display portion 21 to have a horizontally longer screen, which is an aspect advantageous for television reception and displaying its content. In the case of rotating second cabinet 2 in the direction designated by arrow R1, rotational coupling mechanism 3 can realize a stable rotation of second cabinet 2. Due to the rotation, first cabinet 1 and second cabinet 2 are overlapped with each other by a predetermined amount, thereby capable of reducing the size of entire portable information terminal 10.

Fig. 7 is a perspective view of the portable information terminal having the second cabinet which has been rotated from the state illustrated in Fig. 5 in the opposite direction. Referring to Fig. 7, second cabinet 2 can be rotated in the opposite direction designated by an arrow R2 with respect to first cabinet 1. There is no particular limitation on the aspect of rotation thereof, but it is possible to provide a stopper function for stopping the rotation at the positions illustrated in Fig. 6 and Fig. 7. Also, instead of providing the stopper function, second cabinet 2 can be adapted to be rotated with respect to first cabinet 1 without any restriction. Also, rotational coupling mechanism 3 can be configured to allow the rotation of second cabinet 2 only at the position illustrated in Fig. 5 at which second cabinet 2 has been slid. On the contrary, rotational coupling mechanism 3 can be provided to allow second cabinet 2 to rotate with respect to first cabinet 1 at the close position illustrated in Fig. 4.

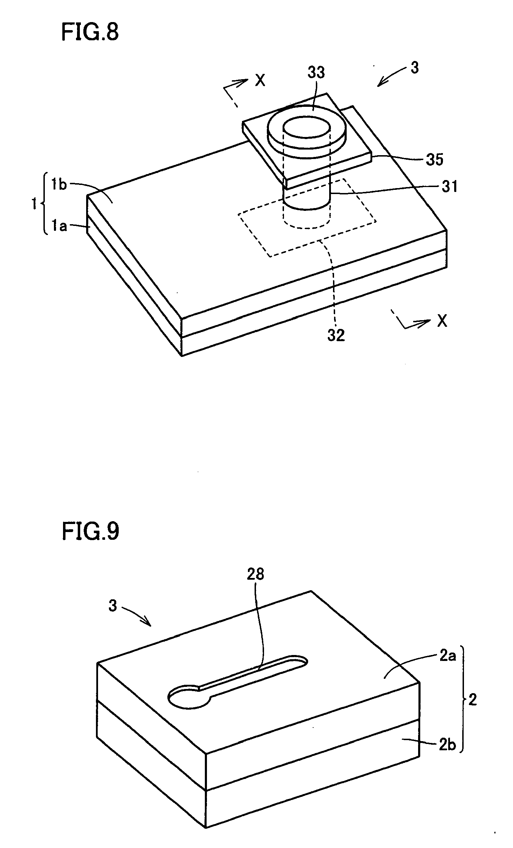

Fig. 8 is a perspective view of the first cabinet for describing the rotational coupling mechanism. Fig. 9 is a perspective view of the second cabinet for describing the rotational coupling mechanism. Referring to Fig. 8, first cabinet 1 is constituted by a bottom cabinet 1a and a top cabinet 1b. Bottom cabinet 1a and top cabinet 1b are secured to each other through screws and the like. A GLAEPO substrates, for example, is placed in the space enclosed with bottom cabinet 1a and top cabinet 1b, and various semiconductors are mounted thereon. A flange 32 is secured to top cabinet 1b and rotation shaft 31 is provided such that it protrudes from flange 32. Rotation shaft 31 has a circular cylindrical shape and extends such that it protrudes from top cabinet 1b.

Rotation shaft 31 has a flange 33 at a tip end thereof and has a greater diameter at this portion. A plate member 35 is fitted to rotation shaft 31. Plate member 35 is attached to second cabinet 2. While, in Fig. 8, flange 32 and plate member 35 have rectangular shapes and flange 33 has a circular shape, their shapes are not limited thereto, but flanges 32 and 33 and plate member 35 can have any of rectangular shapes and circular shapes. Alternatively, they can have other polygonal shapes such as hexagonal shapes, triangular shapes and the like, or can have other shapes such as elliptical shapes.

Referring to Fig. 9, second cabinet 2 has a bottom cabinet 2a and a top cabinet 2b. A liquid crystal substrate is placed in the space enclosed with bottom cabinet 2a and top cabinet 2b. Top cabinet 2b is provided with a window which enables viewing the liquid crystal display device. Bottom cabinet 2a is provided with a slot 28 extending in a single direction, such that it receives rotation shaft 31 illustrated in Fig. 8.

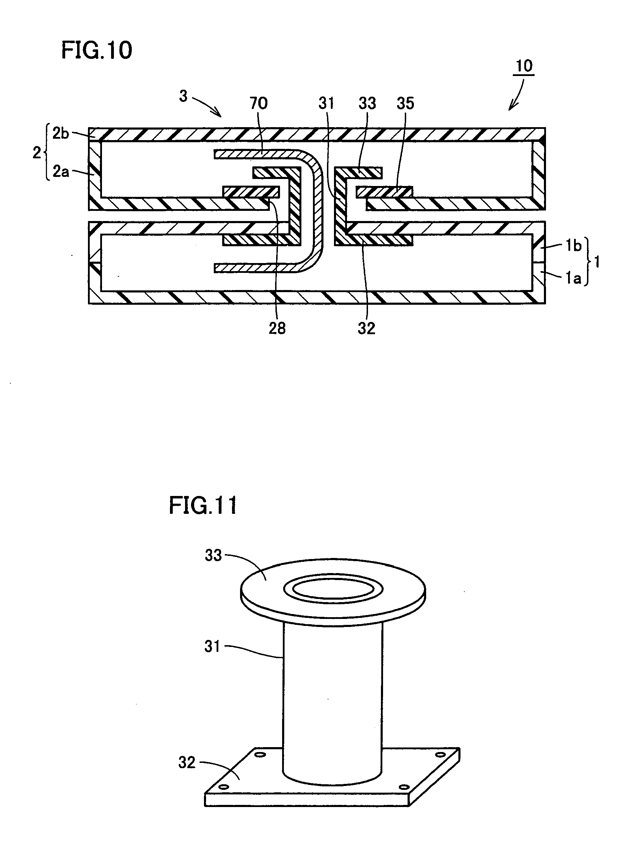

Fig. 10 is a cross-sectional view of the portable information terminal having the combination of the first cabinet and the second cabinet, taken along the line X-X in Fig. 8. Referring to Fig. 8, first cabinet 1 and second cabinet 2 are coupled to each other through rotational coupling mechanism 3. Rotational coupling mechanism 3 has rotation shaft 31, flanges 32 and 33 provided at the opposite ends of rotation shaft 31, and plate member 35 which engages with flange 33. Rotation shaft 31 has a hollow shape, and wiring 70 is passed through the inside thereof. Flange 32 provided at one end of rotational shaft 31 is secured to the inner surface of top cabinet 1b of first cabinet 1. Thus, rotational shaft 31 is also secured to first cabinet 1.

At a tip end portion of rotation shaft 31, flange 33 extends in such a direction that it gets away from the center of rotation shaft 31. Flange 33 is faced to plate member 35 attached to bottom cabinet 2a of second cabinet 2. Plate member 35 covers a portion of slot 28 and has the function of preventing flange 33 from being pulled out from slot 28.

Fig. 11 is a perspective view of the rotation shaft. Referring to Fig. 11, rotation shaft 31 has a constant outer diameter and has flanges 32 and 33 attached to opposite end portions thereof. While rotation shaft 31 has a circular cylindrical shape in Fig. 11, the shape thereof is not limited thereto, but rotation shaft 31 1 as the center shaft can be configured to have a rectangular cylindrical shape or an elliptical cylindrical shape.

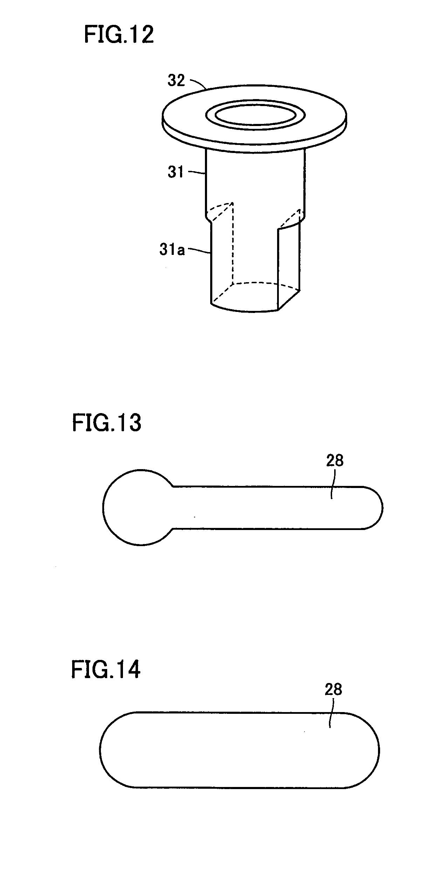

Fig. 12 is a perspective view of rotation shaft 31 according to another aspect. Referring to Fig. 12, rotation shaft 31 can have planar faces 31 a with a smaller width. Planar faces 31 a reduce the diameter of rotation shaft 31. These portions are adapted such that, when these portions engage with the slot, rotation shaft 31 is prevented from rotating, but is allowed to slide only.

Fig. 13 is a plan view of the slot. Fig. 14 is a plan view of the slot according to another aspect. Referring to Fig. 13 and Fig. 14, slot 28 can have a shape with a varying width (Fig. 13) or a shape with a substantially constant width (Fig. 14).

In Fig. 13, when planar faces 31a in Fig. 12 are engaged with the portion with the smaller width, rotation shaft 31 is prevented from rotating. At the portion of slot 28 which has a greater diameter, rotation shaft 31 is allowed to rotate.

While, in Fig. 13 and Fig. 14, slot 28 extends along a straight line, slot 28 is not limited thereto, but slot 28 can meander to such a degree as not to hinder the sliding of rotation shaft 31.

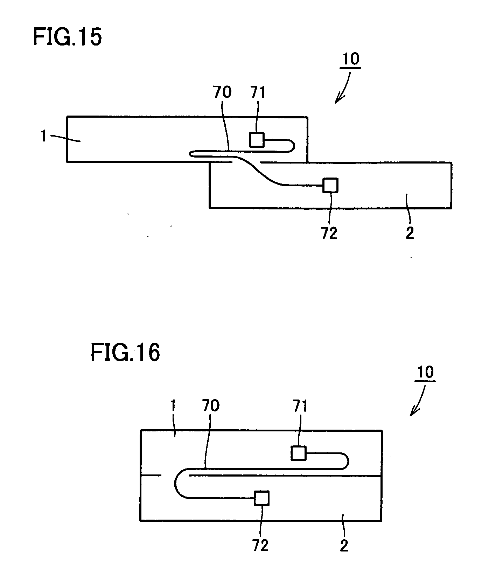

Fig. 15 and Fig. 16 are views illustrating wirings within the portable information terminal. Referring to Fig. 15, terminals 71 and 72 are placed in first cabinet 1 and second cabinet 2, respectively, in portable information terminal 1. Wiring 70 connects terminals 71 and 72 to each other. Wiring 70 transfers information and electric power between terminals 71 and 72. In the state illustrated in Fig. 15, second cabinet 2 has been slid with respect to first cabinet 1. Even in this state, terminal 71 and terminal 72 are electrically connected to each other through wiring 70. As a method for transferring electrical signals between first cabinet 1 and second cabinet 2, for example, a flexible printed circuit (FPC) can be also used for connecting terminals 71 and 72 to each other, as well as a method of using a flexible wiring (round wiring) for connecting two terminals 71 and 72 to each other as described in the present embodiment. Also, a metal rail can be formed at the boundary area between first cabinet 1 and second cabinet 2 such that first cabinet 1 and second cabinet 2 are kept in contact with the metal rail for enabling transferring electrical signals and electric power through the metal rail.

Referring to Fig. 16, even when first cabinet 1 and second cabinet 2 are overlapped with each other, wiring 70 connects terminals 71 and 72 to each other. By providing a play (leeway) in wiring 70 as described above, first cabinet 1 and second cabinet 2 can be electrically connected to each other even when second cabinet 2 is slid with respect to first cabinet 1.

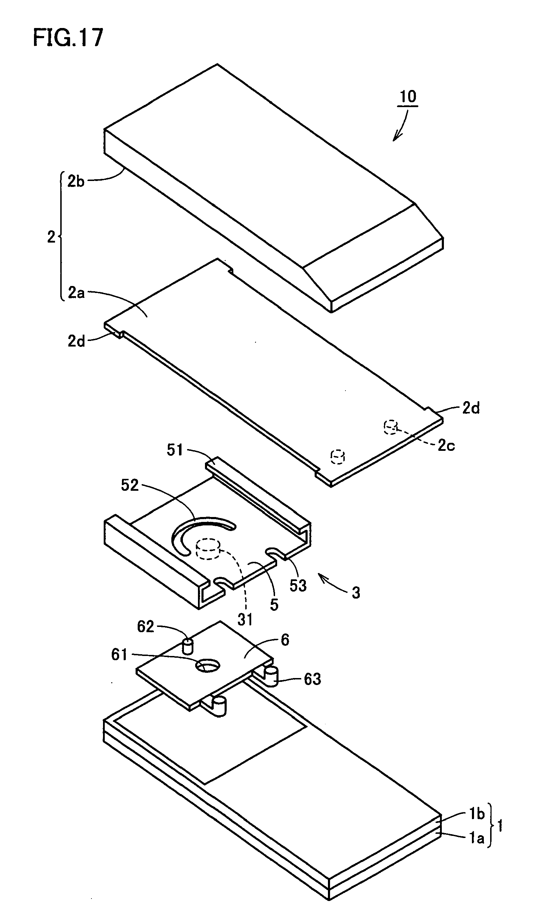

Fig. 17 is an exploded perspective view of the portable information terminal. Referring to Fig. 17, portable information terminal 10 includes first cabinet 1, second cabinet 2 and rotational coupling mechanism 3 for coupling first cabinet 1 and second cabinet 2 to each other. A lock plate 6 which is a constituent of rotational coupling mechanism 3 is housed in first cabinet 1. Lock plate 6 has a through hole 61, a rotation restriction pin 62 provided near through hole 61, and lock springs 63 having a locking function. On lock plate 6, a rotation plate 5 is laminated. Rotation plate 5 has rotation shaft 31, a rotation restriction slot 52 having an arc shape formed about rotation shaft 31, a pair of slide rails 51 placed on the opposite sides of rotation plate 5 such that they extend in parallel to each other, and concave portions 53 provided in a cutout shape at an end portion of rotation plate 5.

Bottom cabinet 2a is fitted to slide rails 51. There are formed convex portions 2d at the opposite end portions of bottom cabinet 2a, and slide rails 51 are hitched to these portions. Bottom cabinet 2a is provided with lock releasing pins 2c, which are fitted to concave portions 53 to push lock springs 63, thereby releasing the lock.

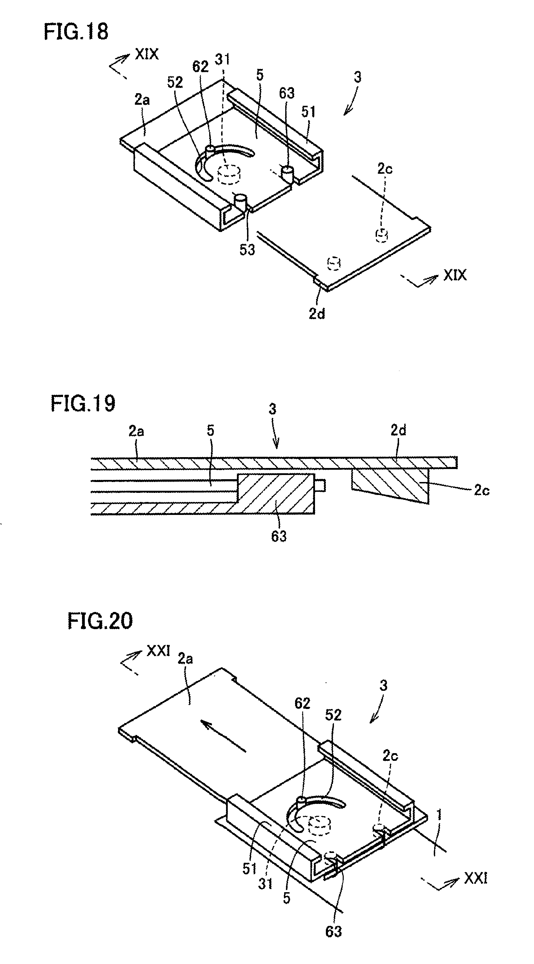

Figs. 18 to 22 are views for explaining the operations of the rotational coupling mechanism. Referring to Fig. 18, lock springs 63 are fitted to concave portions 53 of rotation plate 5, in a state where the first cabinet and the second cabinet are overlapped with each other. This prevents rotation plate 5 from rotating about rotation shaft 31. Similarly, the bottom cabinet 2a of the second cabinet can not rotate about rotation shaft 31. This can maintain the first cabinet and the second cabinet in the state where the second cabinet can not rotate with respect to the first cabinet.

Fig. 19 is a cross-sectional view taken along the line XIX-XIX in Fig. 18. Referring to Fig. 19, lock springs 63 engage with portions of rotation plate 5. This prevents rotation plate 5 from rotating. Similarly, bottom cabinet 2a can not rotate.

Referring to Fig. 20, if bottom cabinet 2a is slid in the direction designated by an arrow, then lock releasing pins 2c will push lock springs 63 downwardly. This releases the lock.

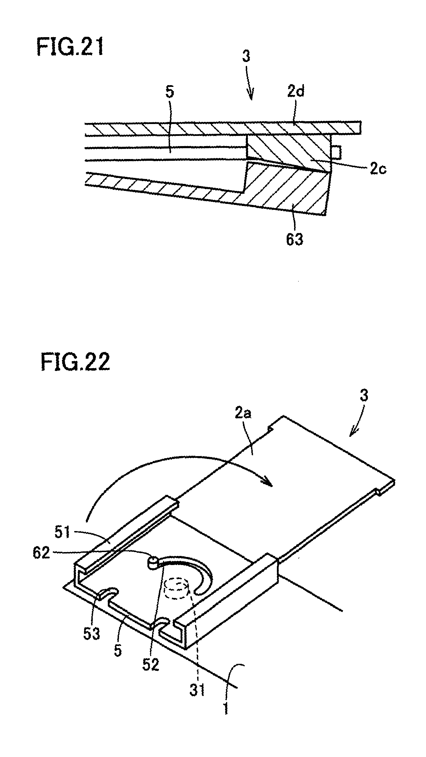

Fig. 21 is a cross-sectional view taken along the line XXI-XXI in Fig. 20. Referring to Fig. 21, lock releasing pins 2c push lock springs 63 downwardly. This releases the engagement between lock springs 63 and rotation plate 5.

Referring to Fig. 22, after the lock is released, rotation plate 5 is rotated about rotation shaft 31 1 together with bottom cabinet 2a. At this time, rotation restriction pin 62 is restricted by rotation restriction slot 52 and, therefore, is stopped at the position at which it has been rotated by 90 degree from the state illustrated in Fig. 20. Further, there is no particular limitation on the rotation restriction angle, but the rotation restriction angle can be set to stop the rotation of rotation restriction pin 62 at the position where rotation restriction pin 62 has been rotated by 120 degree from the position illustrated in Fig. 20, for example.

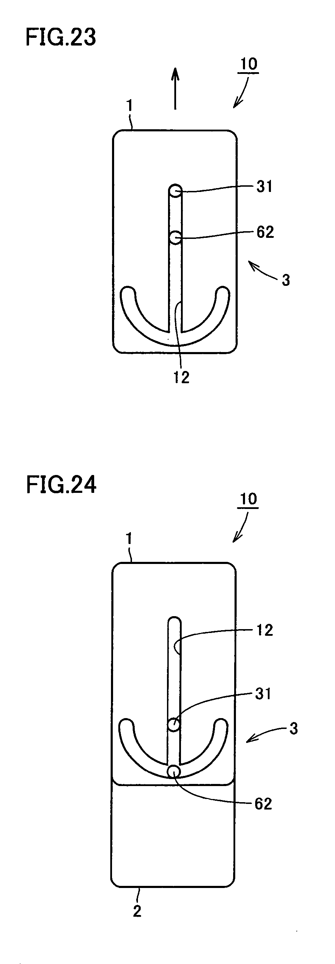

Figs. 23 to 26 are views illustrating a rotational coupling mechanism according to another aspect. Referring to Fig. 23, first cabinet 1 is provided with a slot 12. Slot 12 has an anchor shape and is constituted by a slide portion extending along a straight line and a rotation portion extending in an arc shape. A rotation shaft 31 and a rotation restriction pin 62 provided on the second cabinet are fitted to slot 12. Rotation restriction pin 62 and rotation shaft 31 can move by sliding through slot 12.

Referring to Fig. 24, rotation restriction pin 62 and rotation shaft 31 can be moved through slot 12. Thus, second cabinet 2 can slide with respect to first cabinet 1. Rotation restriction pin 62 is stopped at an end portion of slot 12 formed along a straight line. The position illustrated in Fig. 24 is a sliding limiting position. Second cabinet 2 can not slide any more from this position.

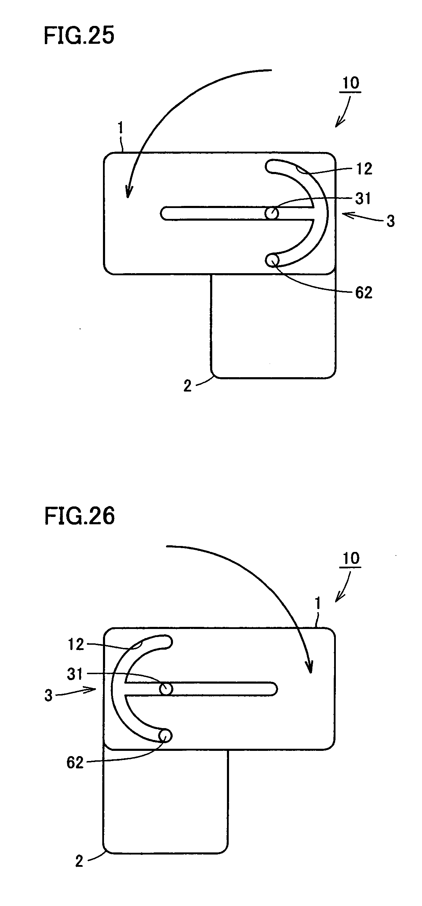

Referring to Fig. 25, first cabinet 1 can be rotated with respect to second cabinet 2 about rotation shaft 31. In this case, rotation restriction pin 62 moves through slot 12 during the rotation and then stops at an end portion of slot 12. In Fig. 25, slot 12 is provided such that the rotation of first cabinet 1 is restricted at the position at which it has been rotated by 90 degree.

Referring to Fig. 26, first cabinet 1 can be rotated in the direction opposite to that of Fig. 25 from the position illustrated in Fig. 24. In this case, similarly, rotation restriction pin 62 is hitched to an end portion of slot 12, thereby restricting the rotation. In Fig. 26, first cabinet 1 is stopped at the position at which it has been rotated by 90 degree from the position illustrated in Fig. 24.

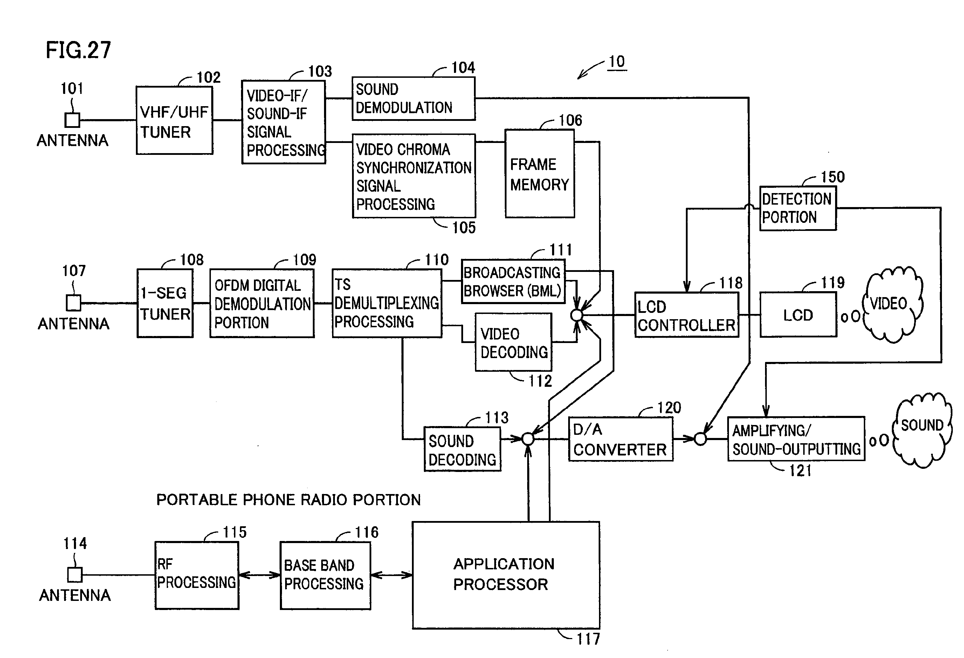

Next, there will be described the circuit structure inside of the portable information terminal. Fig. 27 is a circuit block diagram illustrating a portion of the electric circuit portion in the portable information terminal according to the first embodiment. Referring to Fig. 27, the electric circuit portion in portable information terminal 10 according to the first embodiment of the present invention has a ground-wave analog broadcasting receiving portion, a ground-wave digital broadcasting receiving portion, and a portable phone radio portion.

In the ground-wave analog broadcasting receiving portion, signals received at an antenna 101 are processed by a VHF/UHF tuner circuit 102 and a video-IF (interface)/sound-IF signal processing circuit 103. Thereafter, sound signals are processed by a sound demodulation circuit 104 to be output as sounds from an amplifying/sound-outputting portion 121, while video signals are processed by a video chroma synchronization signal processing circuit 105 and a frame memory circuit 106 to be transmitted to an LCD (Liquid Crystal Display) controller 118.

In the ground-wave digital broadcasting portion, signals received at an antenna 107 are processed by a 1-SEG (segment) tuner circuit 108, an OFDM (Orthogonal Frequency Division Multiplexing) digital demodulation circuit 109 and a TS (Transport Streams) demultiplexing processing circuit 110. Thereafter, video signals are processed by a broadcasting browser circuit 111 and an video decoding circuit 112 in parallel and, then, the processed video signals are transmitted to the LCD controller 118, while sound signals are processed by the broadcasting browser circuit 111 and a sound decoding circuit 113 in parallel and, then, the processed sound signals are transmitted to a DA (Digital/analog) converter circuit 120.

In the portable phone radio portion, signals received at an antenna 114 are passed through an RF (Radio Frequency) processing circuit 115 and a Based band processing circuit and then are passed through an application processor 117. Thereafter, video signals are transmitted to the LCD controller 118, while sound signals are transmitted to the DA converter circuit 120.

The video signals transmitted to the LCD controller 118 are output as videos from an LCD circuit 119. Also, the sound signals transmitted to the DA converter circuit 120 are output as sounds from the amplifying/sound-outputting portion 121.

A detection portion 150 detects the state of portable information terminal 10, namely which direction second cabinet 2 is opened in. Detection portion 150 can also detect the operations of other portable information terminals. As a detection method therefor, it is possible to constitute detection portion 150 by a device such as a Hall device, a switch which is turned on through a mechanical mechanism if second cabinet 2 is rotated with respect to first cabinet 1, and the like. The position information acquired by detection portion 150 is transmitted to LCD controller 118 and/or amplifying/sound-outputting portion 121.

With portable information terminal 10 having the aforementioned configuration according to the first embodiment; as illustrated in Fig. 1, rotation shaft 31 as the center of the rotation is substantially coincident with the center C of the overlapped portions 4 of first and second cabinets 1 and 2, which can reduce the entire size, in comparison with the conventional product illustrated in Fig. 2 in which the center C of the overlapped portions and rotational shaft 31 are not coincident with each other. Namely, the size is made smaller at an LG state, which reduces the area of display portion 21 which is not covered with the palm, thereby improving the style thereof at usage states.

Further, in second cabinet 2, operation key 24 for selecting display items 2 1 a on display portion 21 is placed at an area closer to the portion grasped by the human hand, namely closer to first cabinet 1. This placement enables an operator 401 grasping first cabinet 1 to touch operation key 24 naturally with his or her thumb. As a result, operator 401 is not required to apply forces to the thumb forcedly, which increases the degree of freedom thereof, thereby improving the operability and also improving the appearance of the hand.

Further, rotational coupling mechanism 3 slides and rotates the second cabinet with respect to the first cabinet. The configuration thereof is illustrated in Fig. 17 to Fig. 26, more specifically. By employing this configuration, first cabinet 1 and second cabinet 2 are slid upwardly and downwardly, at first. This can ensure a screen with a vertically-longer shape having a higher frequency of usage, being advantageous for making conversations and sending and receiving e-mails and having been conventionally in common use. This results in improvement of overall usability as a portable phone apparatus.

### (Second Embodiment)

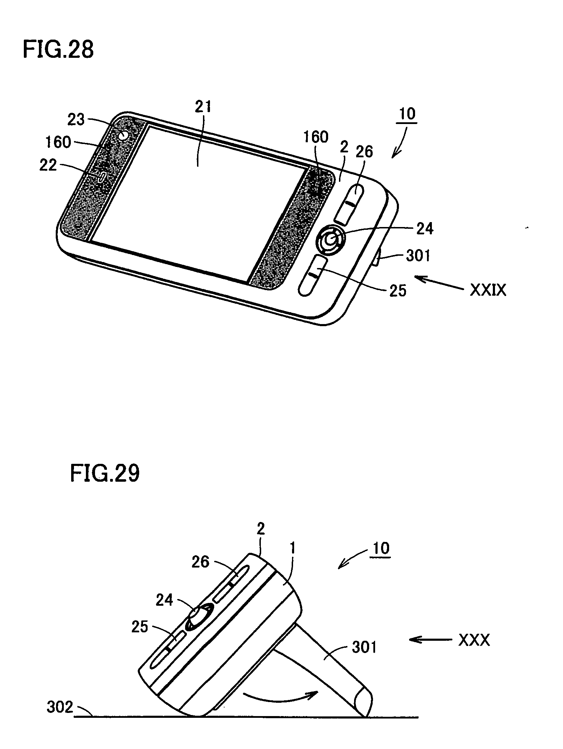

Fig. 28 is a perspective view of a portable information terminal according to a second embodiment of the present invention. Fig. 29 is a side view of the portable information terminal, which is viewed in the direction designated by an arrow XXIX in Fig. 28. Referring to Fig. 28 and Fig. 29, the portable information terminal 10 according to the second embodiment of the present invention is different from portable information terminal 10 according to the first embodiment, in that a strap portion 301 is provided as a stand, on the back surface, namely on first cabinet 1. Strap portion 301 can be held in a state where it is separated from first cabinet 1 and is opened, and a state where it is housed in first cabinet 1 and is closed, as illustrated in Fig. 28 and Fig. 29. As illustrated in Fig. 29, in the state where strap portion 301 is opened, strap portion 301 supports first cabinet 1, which enables obliquely holding portable information terminal 10 on a placement surface 302.

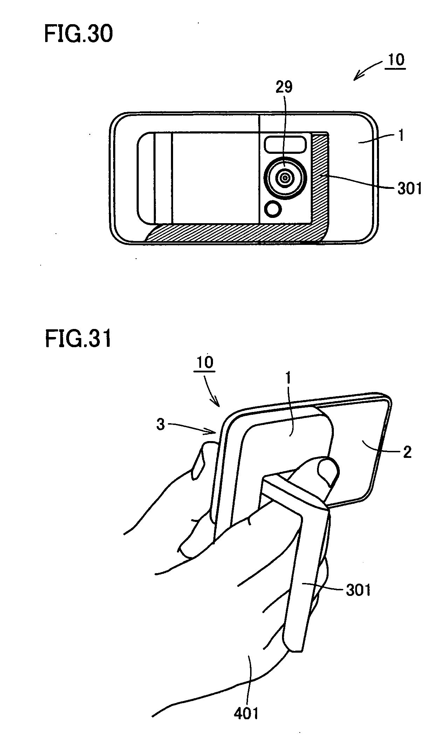

Fig. 30 is a rear view of the portable information terminal, which is viewed in the direction designated by an arrow XXX in Fig. 29. Referring to Fig. 30, "L"-shaped strap portion 301 is provided on first cabinet 1 in portable information terminal 10. Strap portion 301 is the area designated by diagonal lines in Fig. 30. Strap portion 301 extends along a straight line, and an antenna can be housed therein. Also, diversity antennas can be housed in both first cabinet 1 and strap portion 301.

A back-side camera 29 is provided at a portion which is not covered with strap portion 301. Also, it is not necessarily necessary to provide camera 29.

Further, while strap portion 301 has been illustrated as having a rectangular L shape in Fig. 30, the shape thereof is not limited thereto, but strap portion 30 can have a curved shape. Also, a "T" shaped strap portion 301 can be employed.

Fig. 31 is a perspective view illustrating the portable information terminal being at a usage state, according to the second embodiment. Referring to Fig. 31, when an operator 401 holds portable information terminal 10 with his or her hand, strap portion 301 is engaged with a hand of operator 401. Further, in Fig. 31, it is held at the position where second cabinet 2 has been rotated by 90 degree from the position illustrated in Figs. 28 to 30. Further, the position at which portable information terminal 10 is held is not limited to thereto, but portable information terminal 10 can be fixed in a state where second cabinet 2 is held with respect to first cabinet 1 at various angles. For example, second cabinet 2 can be fixed in a state where second cabinet 2 has been rotated by 180 degree with respect to first cabinet 1 from the position illustrated in Figs. 28 to 30 to form a vertically-longer screen. Namely, strap portion 301 of portable information terminal 10 according to the second embodiment functions as a back-side stand for placing the main body obliquely and also functions as a strap for grasping it, thereby improving the holdability.

Portable information terminal 10 includes first cabinet 1 having an operation portion, second cabinet 2 which has a display portion 21 and is partially overlapped with first cabinet 1, a rotational coupling mechanism 3 which couples the first and second cabinets to each other such that second cabinet 2 can be rotated with respect to first cabinet 1, and strap portion 301 provided on at least one of first and second cabinets 1 and 2 on the surface opposite to display portion 21. Strap portion 301 is engaged with a hand of operator 401, in a state where operator 401 grasps portable information terminal 10. In a state where portable information terminal 10 is placed on placement surface 302, strap portion 301 contacts with placement surface 302 to support portable information terminal 10. Namely, although strap portion 301 is provided on first cabinet 1 in the present embodiment, strap portion 301 can be provided on second cabinet 2.

With the portable information terminal having the aforementioned configuration, the function of a strap is added to a conventional stand for improving the holdability. Therefore, the use of strap portion 301 can weaken the grasping force. This results in reduction of the fatigue. Furthermore, portable information terminal 10 is less prone to be fallen even if the palm is opened, which can prevent the occurrence of corruption and damages.

### (Third Embodiment)

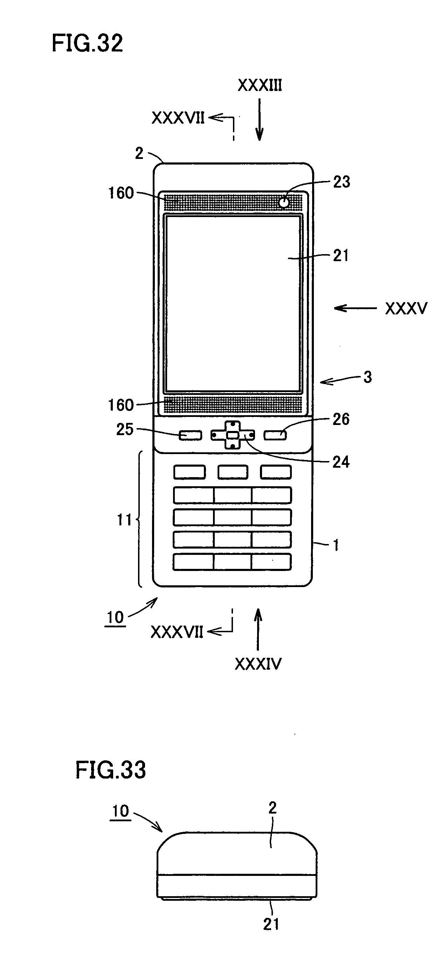

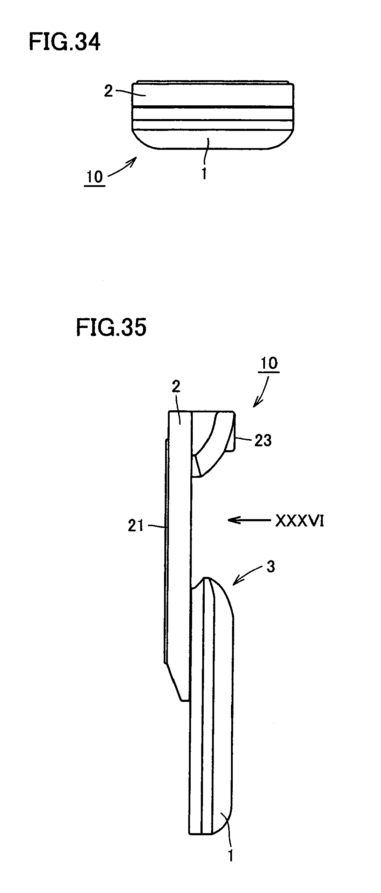

Fig. 32 is a front view of a portable information terminal according to a third embodiment of the present invention. Fig. 33 is a plan view of the portable information terminal when viewed in the direction designated by an arrow XXXIII in Fig. 32. Fig. 34 is a bottom view of the portable information terminal when viewed in the direction designated by an arrow XXXIV in Fig. 32. Fig. 35 is a side view of the portable information terminal when viewed in the direction designated by an arrow XXXV in Fig. 32. Referring to Figs. 32 to 35, portable information terminal 10 according to the third embodiment of the present invention is different from portable information terminals 10 according to the first and second embodiments, in that a lens which is a constituent of a camera 23 has a thickness greater than those in the first and second embodiments. In general, by attaching a lens having a greater thickness and a greater aperture, it is possible to shoot detailed images using such a lens. In portable information terminal 10 according to the third embodiment, camera 23 is constituted with a lens unit having substantially the same thickness as that of portable information terminal 10 so as to improve the shooting performance.

Although camera 23 is provided in second cabinet 2, the position thereof is not limited thereto, but 23 having a lens can be provided in first cabinet 1.

Also, camera 23 can have a rotating function such that it can rotate for shooting images in the longitudinal direction of portable information terminal 10, as well as images near the back side thereof. Also, camera 23 can have an optical zooming function. Camera 23 is provided at a portion of second cabinet 2 which is most distant from first cabinet 1, such that it protrudes therefrom. Camera 23 can be rotated together with second cabinet 2.

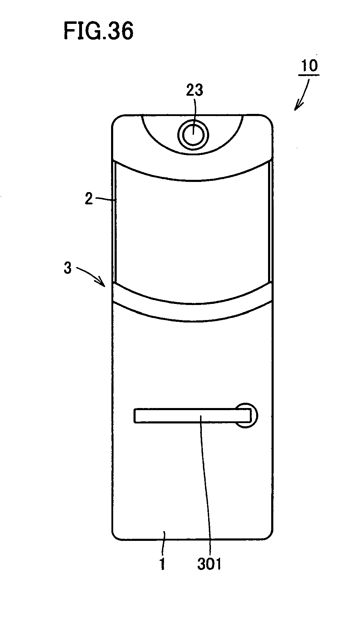

Fig. 36 is a rear side view of the portable information terminal, which is viewed in the direction designated by an arrow XXXVI in Fig. 35. Referring to Fig. 36, in portable information terminal 10, camera 23 is provided on the center line of second cabinet 2 which extends in the longitudinal direction. Camera 23 can be placed at a position deviated from the center line, not on the center line. First cabinet 1 is provided slidably with respect to second cabinet 2. A strap portion 301 which functions as a stand portion is placed on first cabinet 1 such that it can be housed in first cabinet 1. The camera can also be provided on first cabinet.

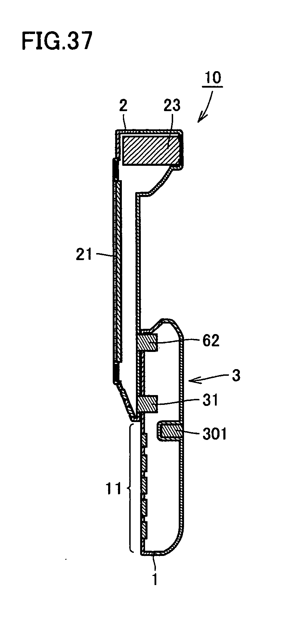

Fig. 37 is a cross-sectional view taken along the line XXXVII-XXXVII in Fig. 32. Referring to Fig. 37, portable information terminal 10 has first cabinet 1 having a box shape and second cabinet 2 having a box shape. On the surface of first cabinet 1, there is placed an operation portion 11 (operation switches) constituted by push buttons. A rotation shaft 31 and a rotation restriction pin 62 are protruded from first cabinet 1. These rotation restriction pin 62 and rotation shaft 31 engage with second cabinet 2. Camera 23 has a thickness substantially the same as that of portable information terminal 10 in the state where first cabinet 1 and second cabinet 2 are overlapped with each other. Rotational coupling mechanism 3 has rotation shaft 31 and rotation restriction pin 62. Also, as the configuration of this rotational coupling mechanism 3, it is possible to employ various types of rotational coupling mechanisms described in the first and second embodiments.

Also, as strap portion 301, it is possible to employ a strap portion engageable with the operator's hand, as described in the second embodiment.

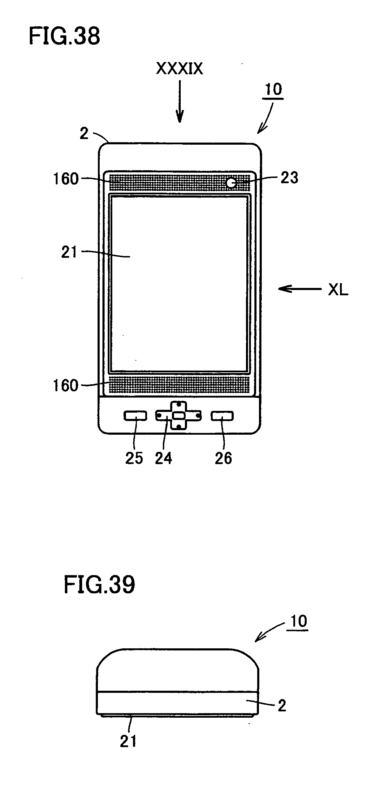

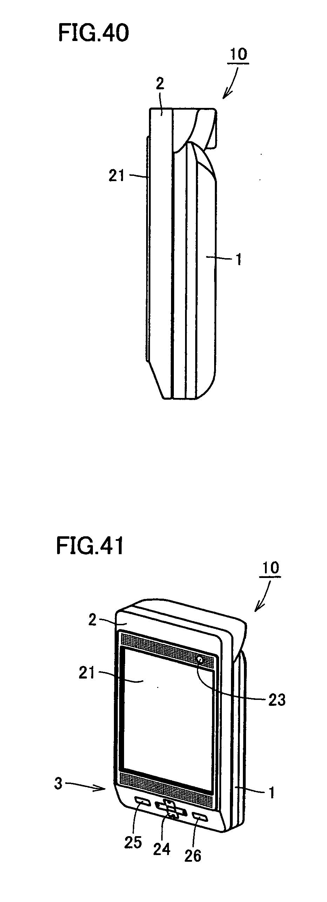

Fig. 38 is a front view of the portable information terminal being in a state where the operation portion is closed. Fig. 39 is a plan view of the portable information terminal, which is viewed in the direction designated by an arrow XXXTX in Fig. 38. Fig. 40 is a side view of the portable information terminal, which is viewed in the direction designated by an arrow XL in Fig. 38. Referring to Figs. 38 to 40, in portable information terminal 10 according to the third embodiment of the present invention, camera 23 is housed in its upper end portion. Camera 23 is capable of shooting images of both the back and front thereof. Accordingly, in cases of using portable information terminal 10 as a video telephone, for example, the operator is shot with camera 23 in a speaker portion 160. The shot image can be transmitted to the partner or can be displayed on a portion of display portion 21.

In cases of shooting images with higher accuracy, camera 23 constituted by a larger-sized lens on the back surface is used. This enables shooting images with a greater number of pixels and higher accuracy.

Figs. 41 to 45 are perspective views illustrating a method of operating the portable information terminal according to the third embodiment. Referring to Fig. 41, at a housing state, first cabinet 1 and second cabinet 2 of portable information terminal 10 are overlapped with each other. At this time, portable information terminal 10 can be either powered off or powered on. In the case where it is powered on, display portion 21 can display the current time, the power-input condition and the like.

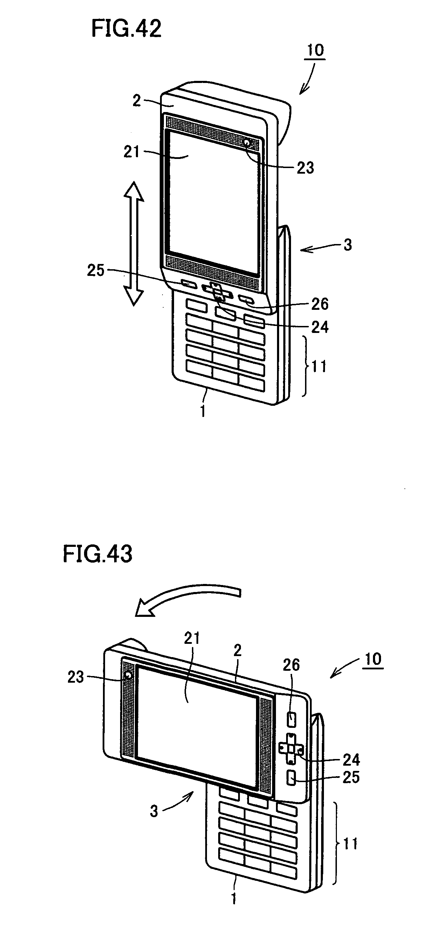

Referring to Fig. 42, second cabinet 2 can be slid with respect to first cabinet 1. Consequently, operation portion 11 is exposed. By sliding it as described above, operation portion 11 is exposed, which enables inputting information through operation portion 11. Also, when it is slid as described above, portable information terminal 10 is used, in general. Therefore, a switch on portable information terminal 10 can be turned on, along with the sliding.

Referring to Fig. 43, second cabinet 2 can be rotated by 90 degree in the leftward direction from the orientation illustrated in Fig. 42. During this rotation, operation portion 11 is prevented from being covered with second cabinet 2. While second cabinet 2 is fixed at the position where it has been rotated by 90 degree in Fig. 43, the rotation thereof can be restricted at this position or it is not necessarily necessary to restrict the rotation at this position. Namely, second cabinet 2 can be further rotated downwardly from the orientation illustrated in Fig. 43. Also, it is preferable that the orientation of an image being displayed on display portion 21 of second cabinet 2 is changed along with the rotation thereof.

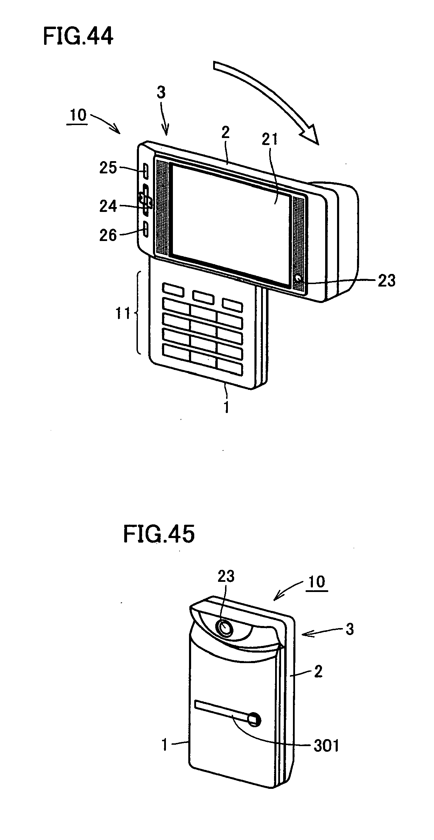

Referring to Fig. 44, second cabinet 2 can be rotated in the rightward direction from the orientation illustrated in Fig. 42. In this case, similarly, the rotation angle is not limited to 90 degree, but the rotation angle can be set to be a greater angle or smaller angle.

At the positions illustrated in Fig. 43 and Fig. 44, shooting can be performed with camera 23. At this time, preferably, an image to be shot is displayed on display portion 21 as a finder. In the state illustrated in Fig. 43, the top and bottom of videos are opposite to those of videos obtained in the state illustrated in Fig. 44. Accordingly, shot images can be reversed in storing them, by defining Fig. 43 or Fig. 44 as a standard. Namely, in the case of shooting an image in the state illustrated in Fig. 43 and then replaying this image in the state illustrated in Fig. 44, this image is reversed in the vertical direction. In order to prevent such reversing, it is possible to conduct some electric processing for reversing the data in the vertical direction. Also, without conducting such processing, the data resulted from shooting can be stored as such.

Referring to Fig. 45, even in the state where first cabinet 1 and second cabinet 2 are overlapped with each other, camera 23 as a lens portion is capable of shooting videos of the outside. Namely, camera 23 is not covered with first cabinet 1.

In the portable information terminal having the aforementioned configuration according to the third embodiment of the present invention, there is placed camera 23 having substantially the same thickness as that of portable information terminal 10. Namely, there is placed the lens unit having a greater size which straddles the upper and lower layers, in the cabinet having display portion 21 for providing a slidable configuration. This enables realization of a slidable configuration, without any constraint on the size of the lens unit.

### (Fourth Embodiment)

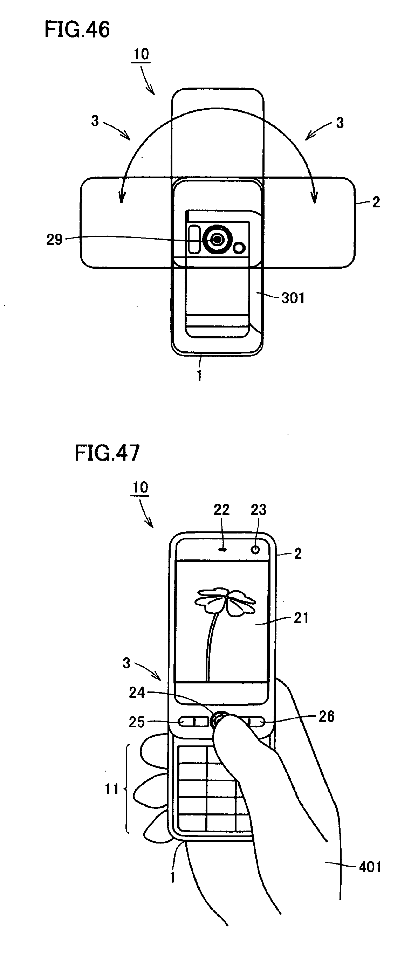

Fig. 46 is a rear view of a portable information terminal according to a fourth embodiment of the present invention. Referring to Fig. 4, in portable information terminal 10 according to the fourth embodiment of the present invention, a second cabinet 2 can be moved at various angels with respect to first cabinet 1. At this time, videos shot with a camera 29 provided on the back surface are subjected to various processes and are displayed in second cabinet 2.

Fig. 47 is a front view of the portable information terminal when it is used for shooting with a vertically longer composition. Referring to Fig. 47, in the case of shooting with a vertically longer composition, first cabinet 1 and second cabinet 2 of portable information terminal 10 are placed such that they extend along a straight line. At this time, display portion 21 displays an object in a vertically-longer manner. Also, a shutter button for camera 29 can be constituted by an operation key 24. Also, a dedicated switch for the shutter can be provided in operation portion 11.

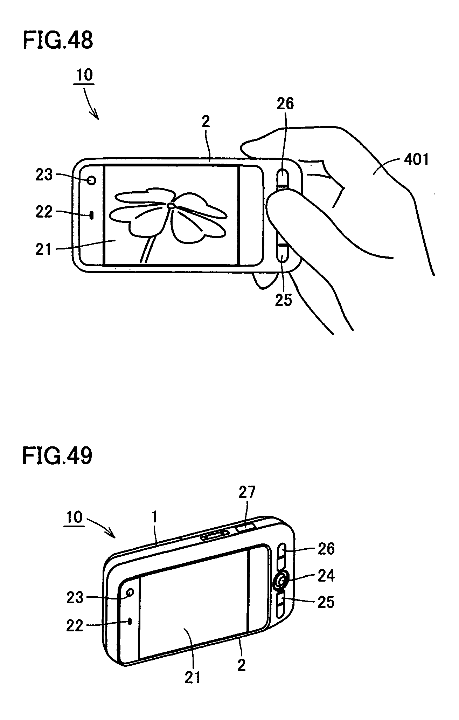

Fig. 48 is a view illustrating the portable information terminal, in a case of shooting with a horizontally longer composition. Referring to Fig. 48, in the case of shooting an object with a horizontally-longer composition, the entire portable information terminal 10 is rotated by about 90 degree from the orientation illustrated in Fig. 47. Accordingly, the object is displayed on display portion 21 in a horizontally-longer manner, through the camera.

Further, Fig. 48 illustrates a state where display portion 21 is overlapped with the entire surface of operation portion 11, namely a state where second cabinet 2 has been slid and closed and the main body is placed horizontally. In the case of shifting from the state illustrated in Fig. 47 to the state illustrated in Fig. 48, there is no need for electronic changeover of the shooting angle. Namely, images shot with the camera can be directly displayed on display portion 21. Accordingly, an operator 401 can hold portable information terminal 10 as illustrated in Fig. 47 and Fig. 48 in accordance with a vertically longer composition or a horizontally longer composition and can push operation key 24 for shooting an image.

Fig. 49 is a perspective view of the portable information terminal according to the fourth embodiment of the present invention. Referring to Fig. 49, a shutter button 27 can be provided in portable information terminal 10. As illustrated in Fig. 48, shutter button 27 is placed such that an index finger of operator 401 is placed on shutter button 27 in the case of shooting at a horizontal angle. This enables pushing the shutter extremely naturally, thereby improving the operability. Also, instead of providing shutter button 27, operation key 24 can be used as a shutter button. Also, other keys can be used as a shutter button.

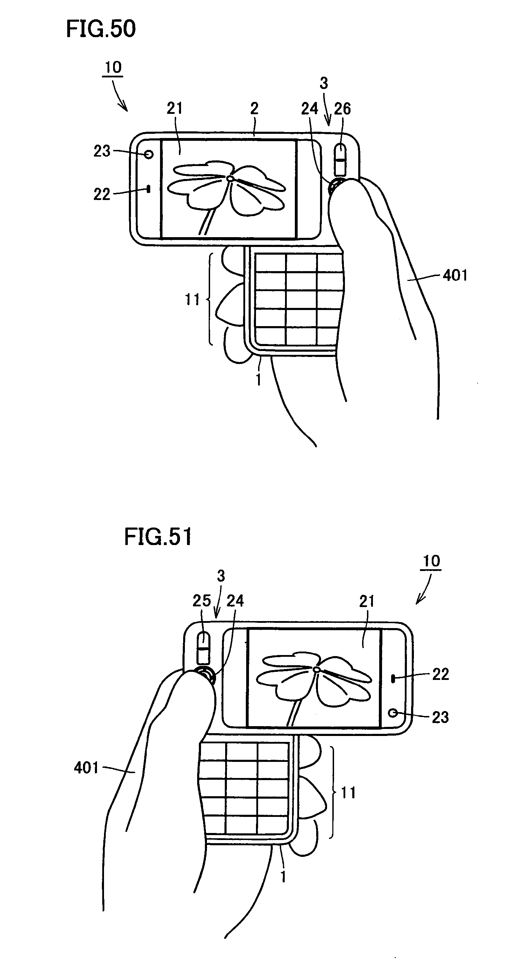

Fig. 50 and Fig. 51 are front views of the portable information terminal, in the case of shooting an image in a state where it folded. Referring to Fig. 50, portable information terminal 10 can shoot images, even in a state where portable information terminal 10 is folded in an L shape. In this case, second cabinet 2 is folded leftwardly from the state illustrated in Fig. 47. In this case, there is a need for electronically changing over the shooting angle from the state illustrated in Fig. 47. Namely, first cabinet 1 having camera 29 placed therein extends in the vertical direction in Fig. 5, while second cabinet 2 having display portion 21 provided therein extends in the horizontal direction in Fig. 5. Consequently, there is a need for conducting some electronic processing on videos to adapt the videos to the horizontally-longer screen, for shifting from the state illustrated in Fig. 47.

This processing is electronic processing and is conducted by detection portion 150 and LCD controller 118 in Fig. 27. More specifically, detection portion 150 detects which direction second cabinet 2 is rotated in with respect to first cabinet 1. This rotation information is transmitted to LCD controller 118. LCD controller 118 determines the rotation angle of second cabinet 2, based on the data transmitted from detection portion 150. LCD controller 118 can properly change the orientation of the image to be displayed on LCD 119 (display portion 21), according to the aforementioned rotation angle.

Referring to Fig. 51, when second cabinet 2 is rotated by 90 degree rightwardly from the position illustrated in Fig. 47, similarly, there is a need for electronically changing over the shooting angle. In this case, there is a need for conducting inverse processing to the processing illustrated in Fig. 5 for adapting the object to the horizontally longer display portion 21. Namely, with portable information terminal 10 according to the fourth embodiment, it is possible to perform changeover between the horizontal and vertical angles of display portion 21 according to the composition of the object, easily with one hand, without changing the way of grasping it. Along therewith, it is also possible to change over, electronically, the shooting angle of camera 29 provided on the back surface of the main body.

Namely, portable information terminal 10 according to the fourth embodiment includes rotational coupling mechanism 3 for coupling first and second cabinets 1 and 2 to each other such that second cabinet 2 can be slid and rotated with respect to first cabinet 1, wherein the orientation of images to be displayed on display portion 21 can be changed over according to the rotation state of second cabinet 2.

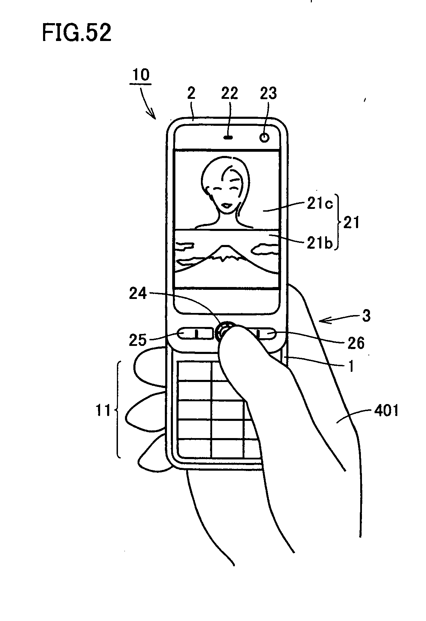

Fig. 52 is a front view of the portable information terminal, in the case of performing live coverage while shooting an object. Referring to Fig. 52, two display items 21b and 21c are displayed on display portion 21 of portable information terminal 10. Display item 21b is an object or an attached image. The object is a video being shot with the camera on the back surface of the main body. The attached image includes an image incorporated in the main body or an image transmitted from a communication partner, other than an image shot in real time.

On the contrary, display item 21 c is a real-time image of the communication partner. For example, in cases of using portable information terminal 10 as a terminal for a video conference, display item 21c displays the face of the communication partner, while display item 21b displays the face of operator 401. Camera 23 shoots the face of operator 401. In Fig. 52, vertically-longer display portion 21 is divided into two parts to display two display items 21b and 21c.

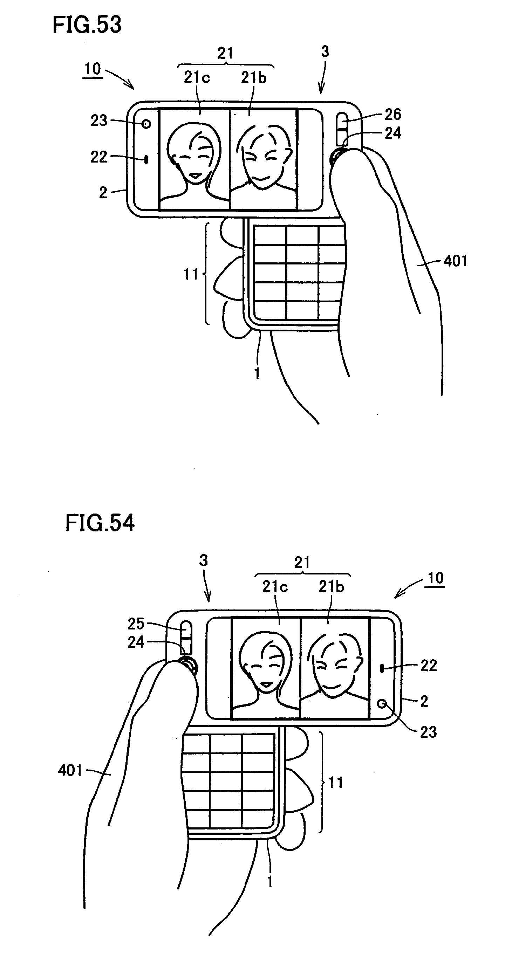

Fig. 53 is a front view of the portable information terminal being folded. Referring to Fig. 53, when second cabinet 2 is folded, display portion 21 has a horizontally-longer shape. In this case, there is exemplified a state where the operator makes conversation while shooting himself or herself Display item 21 c displays a real-time image of the communication partner. On the other hand, display item 21b displays a real-time image of operator 401 resulted from shooting operator 401 with camera 23. While, in Fig. 53, the image of the operator is displayed on the right-hand side and the image of the partner is displayed on the left-hand side, the way of displaying them can be reversed therefrom.

Fig. 54 is a front view of the portable information terminal being folded. Referring to Fig. 54, when second cabinet 2 is rotated by 180 degree in the rightward direction with respect to first cabinet 1 from the orientation illustrated in Fig. 53, display items 21b and 21c are also rotated. The control therefor is conducted by LCD controller 118 in Fig. 27. Detection portion 150 illustrated in Fig. 27 detects the position (rotational position) of second cabinet 2 with respect to first cabinet 1. In Fig. 54, detection portion 150 detects that second cabinet 2 has been rotated rightwardly from the state illustrated in Fig. 53. Based on the detected data, detection portion 150 transmits position information to LCD controller 118. Based on the position information, LCD controller 118 reverses the video to be displayed on LCD 119.

Namely, in the present embodiment, it is possible to perform changeover between the vertical and horizontal angles for the video phone function. It is possible to perform changeover between the vertical and horizontal angles, according to the flow of conversations, without changing the way of grasping. Along therewith, the way of arranging divided screens can be changed.

### (Fifth Embodiment)

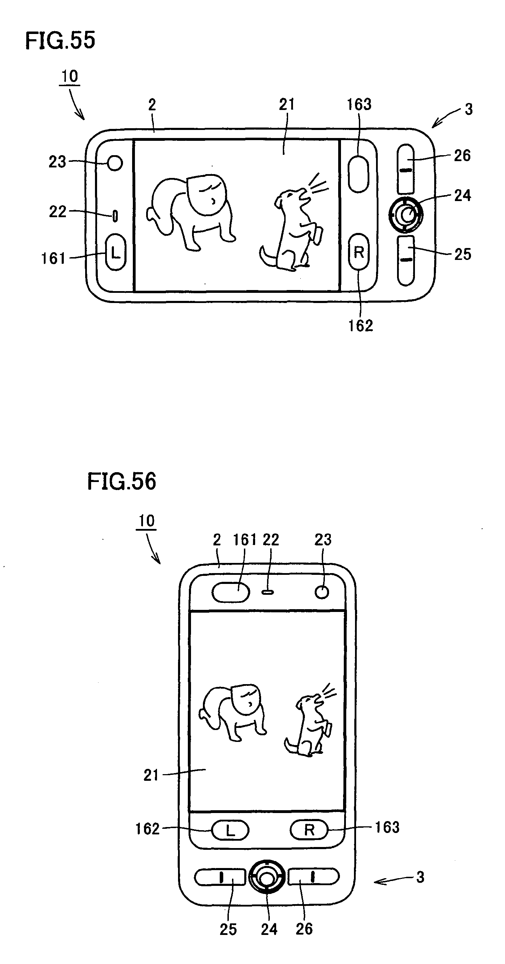

Fig. 55 is a front view of a portable information terminal according to a fifth embodiment of the present invention. Referring to Fig. 55, portable information terminal 10 according to the fifth embodiment of the present invention is different from the portable information terminals described in the first to fourth embodiments, in that stereo speakers 161, 162 and 163 are employed. The human's auditory abilities include the sound image localization ability for determining the directions of sound sources and the like. By utilizing them, it is possible to regenerate, to some degree, senses of directions of instruments and senses of realism, which can be felt at actual sites, such as concerts. As a method therefor, it is possible to utilize stereo speakers 161, 162 and 163. In Fig. 55, stereo speaker 161 is a left speaker L and stereo speaker 162 is a right speaker R. Further, stereo speakers 161 and 162 are set to be on while stereo speaker 163 is set to be off. Therefore, stereo speaker 163 generates no sounds.

However, stereo speaker 163 can be set to generate sounds. Operation key 24 can be used as a key for changing over the screen. In the present embodiment, three stereo speakers 161, 162 and 163 are provided in a single portable information terminal 10.

Fig. 56 is a front view of the portable information terminal in a state where it has a vertically longer shape, according to the fifth embodiment. Referring to Fig. 56, when portable information terminal 10 is in the state where it has the vertically-longer shape, an image to be displayed on display portion 21 is displayed thereon according to the vertically-longer screen and, at the same time, the condition of replaying by stereo speakers 161, 162 and 163 is changed over. This changeover is performed by operating operation key 24. In the state illustrated in Fig. 56, stereo speaker 161 is set to be off, while stereo speaker 162 functions as a left speaker L, and stereo speaker 163 functions as a right speaker R. Also, while stereo speaker 161 is set to be off, in this state, it is necessarily necessary to set it to be off, but stereo speaker 161 can function as a left speaker.

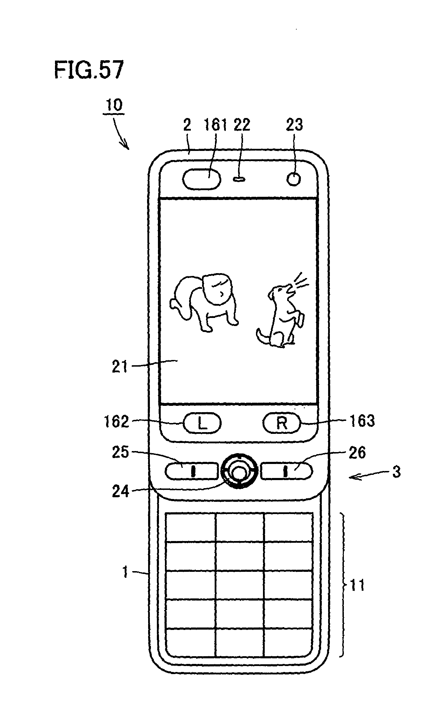

Fig. 57 is a front view of the portable information terminal, in a state where the second cabinet has been slid from the position illustrated in Fig. 56. Referring to Fig. 57, if second cabinet 2 is slid, then first cabinet 1 appears, thereby exposing operation portion 11. In this case, the image displayed on display portion 21 and the condition of replaying (the condition of operations) of stereo speakers 161, 162 and 163 are not changed.

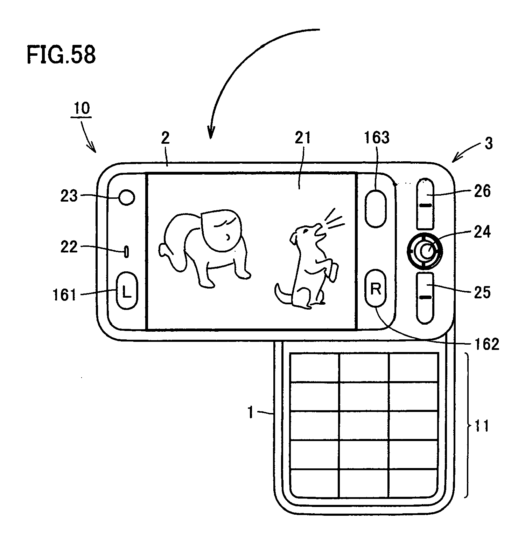

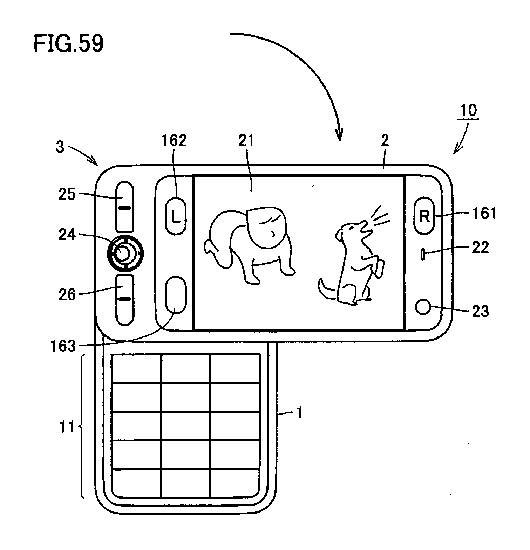

Fig. 58 and Fig. 59 are front views of the portable information terminal being folded. Referring to Fig. 58, if second cabinet 2 is rotated leftwardly by 90 degree from the state illustrated in Fig. 57, this changes over the display on display portion 21 and also changes over the replaying condition of stereo speakers 161, 162 and 163. More specifically, stereo speaker 161 is caused to function as a left speaker L, while stereo speaker 162 is caused to function as a right speaker R. Stereo speaker 163 is set to be off LCD controller 118 in Fig. 27 conducts such changeover of the image, while amplifying/sound-outputting portion 121 in Fig. 27 conducts changeover of sounds.

More specifically, if second cabinet 2 is rotated from the state illustrated in Fig. 57 to the state illustrated in Fig. 58, then detection portion 150 detects this rotation. Detection portion 150 transmits information about the rotation (information about the position of second cabinet 2) to amplifying/sound-outputting portion 121. Based on this, amplifying/sound-outputting portion 121 selects appropriate stereo speakers and supplies sound signals to these stereo speakers.

Referring to Fig. 59, if second cabinet 2 is rotated by 90 degree in the rightward direction from the orientation illustrated in Fig. 57, this causes display portion 21 to be placed in a horizontally-longer manner, as illustrated in Fig. 59. At this time, the operations of stereo speakers 161, 162 and 163 are changed over. More specifically, stereo speaker 161 is caused to function as a right speaker R, stereo speaker 162 is caused to function as a left speaker L, and stereo speaker 163 is set to be off. At this time, LCD controller 118 and amplifying/sound-outputting portion 121 performs the changeover of display portion 21 and stereo speakers 161, 162 and 163, based on information about the position detected by detection portion 150 illustrated in Fig. 27.

Next, there will be described a case where there are provided two stereo speakers.

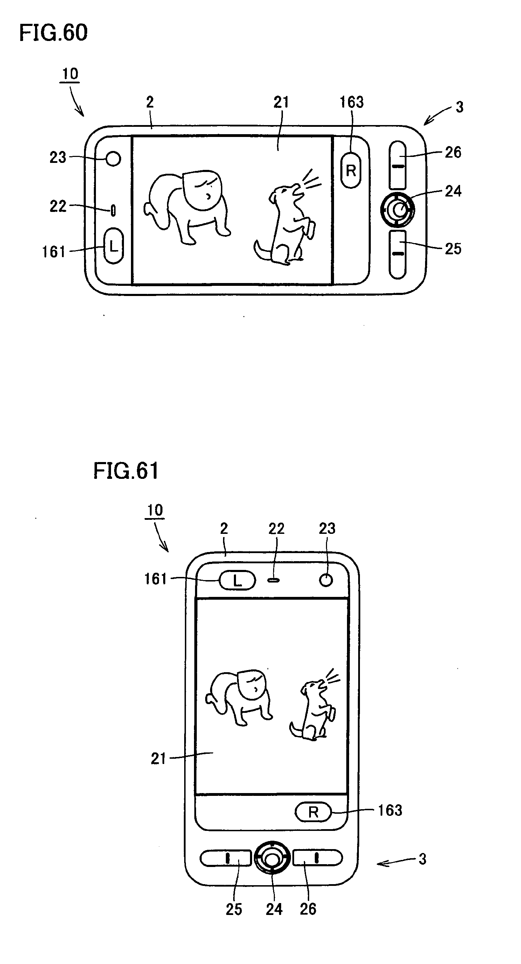

Figs. 60 and 61 are front views of a portable information terminal according to the fifth embodiment of the present invention. Referring to Fig. 60, in the fifth embodiment of the present invention, the portable information terminal according to another aspect is different from portable information terminal 10 illustrated in Fig. 55, in that there are provided two stereo speakers 161 and 163. Two stereo speakers 161 and 163 are placed along a diagonal line, wherein stereo speaker 161 functions as a left speaker L and stereo speaker 163 functions as a right speaker R.

Referring to Fig. 61, in the case of setting a vertically-longer screen, the orientation of the image to be displayed on the display portion 21 is changed. This change is performed by pushing operation key 24, for example. On the other hand, the positional relationship between stereo speakers 161 and 163 as the right speaker L and the left speaker R is not changed. This is because of the effect of placement of stereo speakers 161 and 163 along the diagonal line of display portion 21. Namely, it is possible to reduce the number of changeovers.

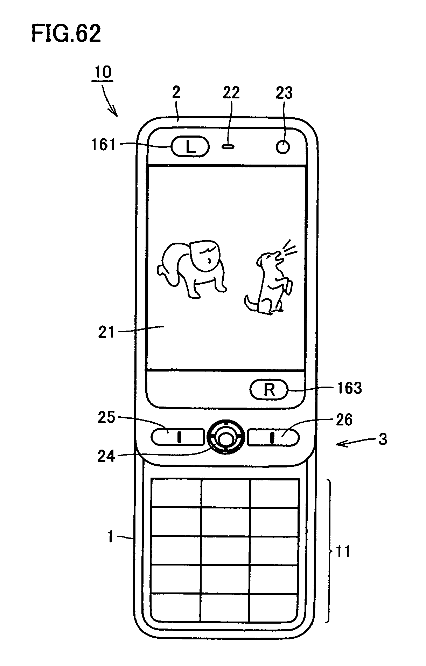

Fig. 62 is a front view of the portable information terminal, when the second cabinet has been slid with respect to the first cabinet. Referring to Fig. 62, if second cabinet 2 is slid from the orientation illustrated in Fig. 61, this causes operation portion 11 of first cabinet 1 to be exposed. At this time, the display on display portion 21 and the output from stereo speakers 161 and 163 are not changed over.

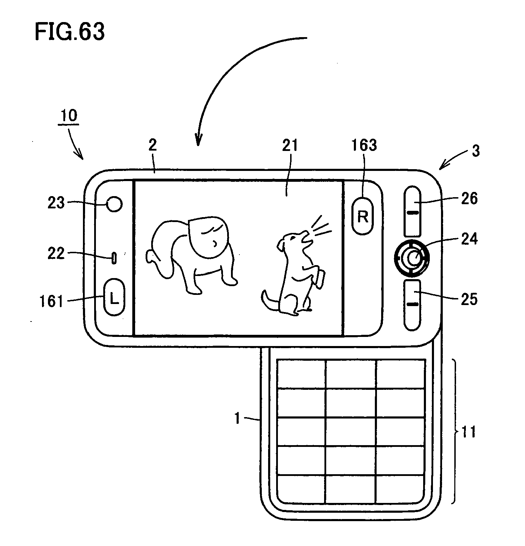

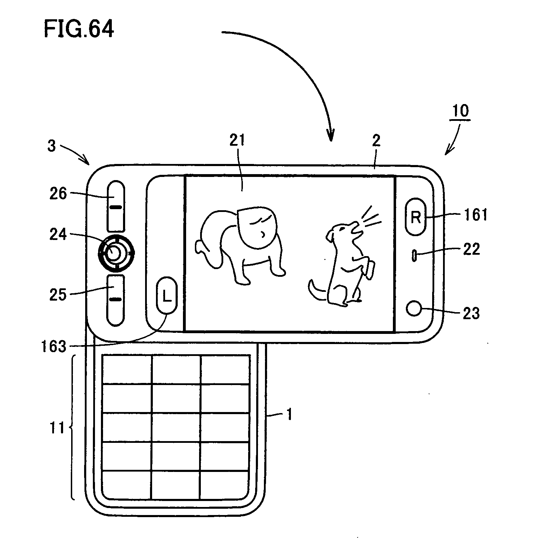

Fig. 63 and Fig. 64 are front views of the portable information terminal being folded. Referring to Fig. 63, if second cabinet 2 is rotated by 90 degree leftwardly from the position illustrated in Fig. 62, this causes the orientation of the image displayed on display portion 21 to be changed over. At this time, detection portion 150 and LCD controller 118 in Fig. 27 perform the changeover. However, the positional relationship between stereo speakers 161 and 163 as a right speaker R and a left speaker L is not changed.

Referring to Fig. 64, if second cabinet 2 is rotated rightwardly by 90 degree from the position illustrated in Fig. 62, this causes the orientation of the image displayed on display portion 21 to be changed over. Detection portion 150 and LED controller 118 in Fig. 27 perform this. Further, the placement of stereo speakers 161 and 163 as a right speaker and a left speaker is changed over. Namely, stereo speaker 161 is caused to function as a right speaker R, while stereo speaker 163 is caused to function as a left speaker L.

In portable information terminal 10 illustrated in Figs. 60 to 64, the relationship between stereo speakers 161 and 163 as a right speaker R and a left speaker L is changed over, only at the timing of changeover from Fig. 62 to Fig. 64. This can reduce the number of changeovers, thereby reducing the burden on information processing through electric circuits.

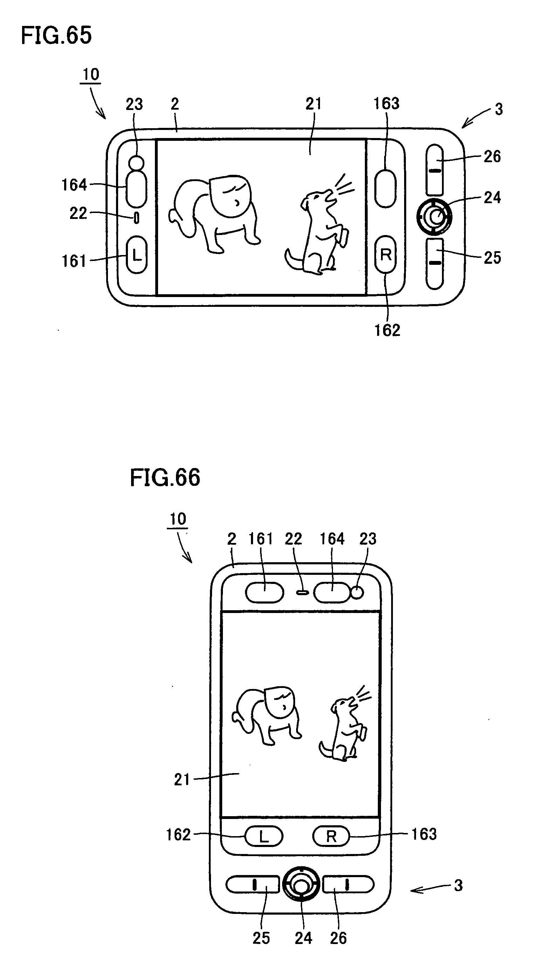

Fig. 65 is a front view of a different portable information terminal according to the fifth embodiment. Referring to Fig. 65, the portable information terminal is different from the aforementioned portable information terminals 10, in that there are provided four stereo speakers 161, 162, 163 and 164. Among four stereo speakers 161, 162, 163 and 164, stereo speaker 161 functions as a left speaker L, while stereo speaker 162 functions as a right speaker R. Further, stereo speakers 163 and 164 are set to be off. However, stereo speakers 163 and 164 can be set to be on. In this case, stereo speaker 163 functions as a right speaker R, while stereo speaker 164 functions as a left speaker L.

Referring to Fig. 66, if portable information terminal 10 is rotated by 90 degree from the position illustrated in Fig. 65, this causes the image displayed on display portion 21 and the replaying condition of stereo speakers 161, 162, 163 and 164 to be changed over. This changeover is performed by operating operation key 24. In Fig. 66, stereo speaker 162 functions as a left speaker L, while stereo speaker 163 functions as a right speaker R. Stereo speakers 161 and 164 are set to be off. At this time, stereo speakers 161 and 164 can be set to be on. Referring to Fig. 64, if second cabinet 2 is slid from the position illustrated in Fig. 66, this causes operation portion 11 of first cabinet 1 to be exposed. In the case of sliding it as described above, the image displayed on display portion 21 and the replaying condition of stereo speakers 162 and 163 are not changed.

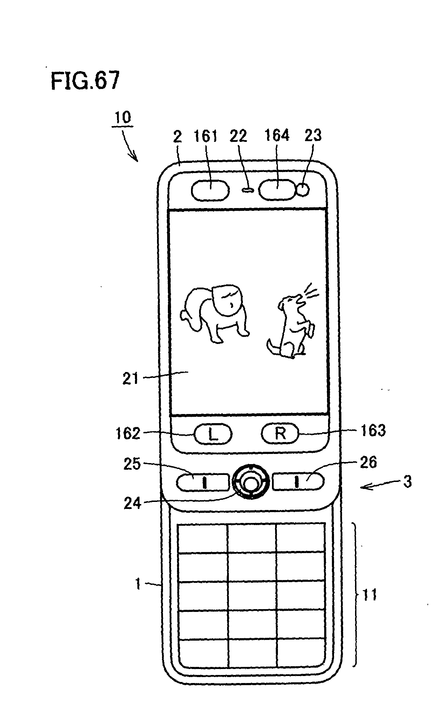

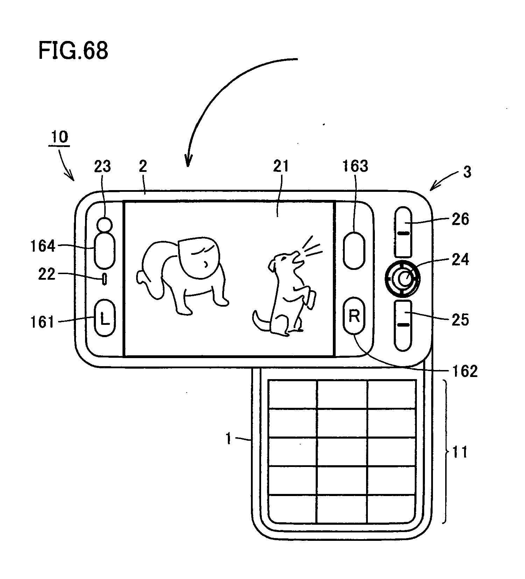

Referring to Fig. 68, if second cabinet 2 is rotated by 90 degree leftwardly with respect to first cabinet 1 from the position illustrated in Fig. 67, this causes the image displayed on display portion 21 and the output of stereo speakers 161, 162, 163 and 164 to be changed over. Detection portion 150 detects the rotational angle of second cabinet 2 and, based on this, LCD controller 118 and amplifying/sound-outputting portion 121 perform the aforementioned changeover. In Fig. 68, stereo speaker 161 functions as a left speaker L, while stereo speaker 162 functions as a right speaker R. The other stereo speakers 163 and 164 are set to be off. Also, stereo speakers 163 and 164 can be set to be on, stereo speaker 163 can function as a right speaker R and stereo speaker 164 can function as a left speaker L.

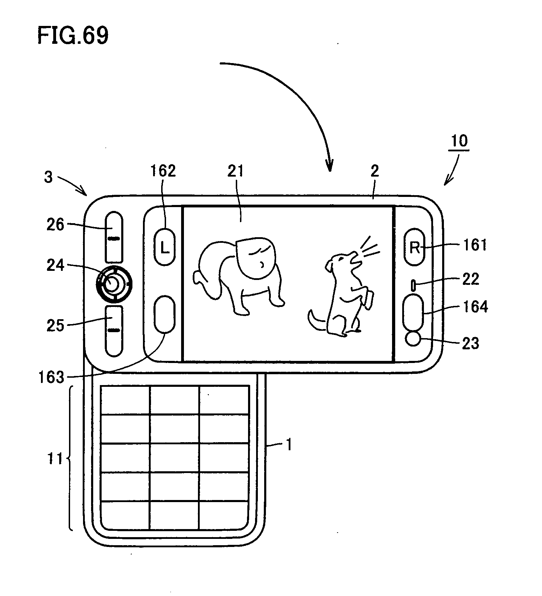

Referring to Fig. 69, if second cabinet 2 is rotated by 90 degree with respect to first cabinet 1 from the position illustrated in Fig. 67, this causes the orientation of the image displayed on display portion 21 and the replaying condition of stereo speakers 161, 162, 163 and 164 to be changed over. More specifically, stereo speaker 163 is set to be on and caused to function as a left speaker L. Further, stereo speaker 164 is set to be on and caused to function as a right speaker R.

Namely, portable information terminal 10 according to the fifth embodiment includes first cabinet 1 having operation portion 11, second cabinet 2 having display portion 21 and being partially overlapped with first cabinet 1, rotational coupling member 3 which couples first and second cabinets 1 and 2 to each other such that second cabinet 2 can rotate with respect to first cabinet 1, stereo speakers 161 to 164 provided in second cabinet 2 on the opposite sides of display portion 21, and amplifying/sound-outputting portion 121 as a control portion for changing over the replaying condition of stereo speakers 161 to 164 according to the state of the display on display portion 21.

Portable information terminal 10 having the aforementioned configuration according to the fifth embodiment can offer the same effects as those of the portable information terminal according to the first embodiment.

### (Sixth Embodiment)

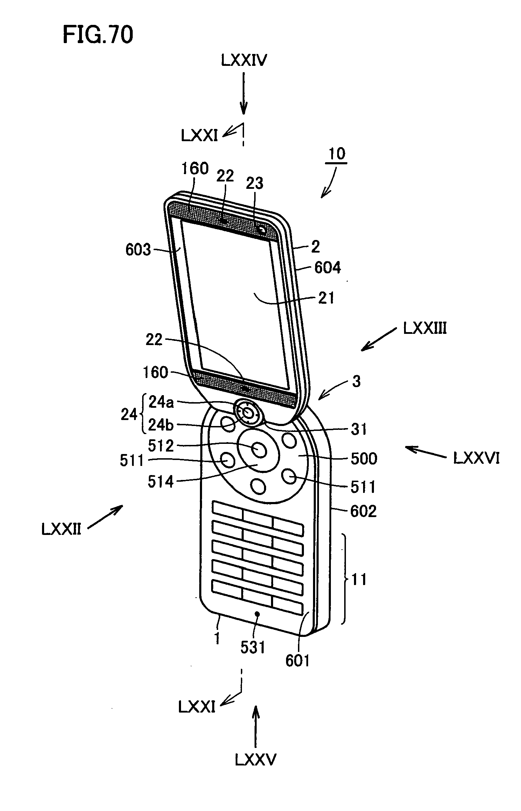

Fig. 70 is a perspective view of a portable information terminal according to a sixth embodiment of the present invention. Referring to Fig. 70, a portable information terminal 10 according to the sixth embodiment of the present invention is different from the portable information terminals according to the first to fifth embodiments, in that a second cabinet 2 is coupled to a turn table 500. Turn table 500 can be rotated about a rotation shaft which exists near a determination key 512. Second cabinet 2 is attached onto this turn table 500. On a first cabinet 1, there is provided turn table 500 rotatable in opposite directions.

Further, the direction of rotation of turn table 500 is not limited to the opposite directions, but turn table 500 can be rotated only in a single direction. Also, turn table 500 can be configured to be stopped in its rotation at predetermined angles. A rotation shaft 31 is provided on turn table 500. Rotation shaft 31 is rotatable with respect to turn table 500. Second cabinet 2 is attached to rotation shaft 31. Second cabinet 2 is openable and closable with respect to first cabinet 1, namely rotatable about rotation shaft 31 in such a direction as to approach first cabinet 1 and in such a direction as to separate from first cabinet 1.

Fig. 70 illustrates a so-called usage state where second cabinet 2 is separated from first cabinet 1. On turn table 500, there is placed determination key 512 at its center and, also, there are placed function keys 511 therearound. Also, the placement of keys is not limited to the aforementioned placement, but function keys can be placed at the center and a determination key can be placed therearound. At the center portion of rotation shaft 31, there is placed an operation key 24 constituted by a determination key 24a and a search key 24b. Further, a search key 514 is placed around determination key 512. First cabinet 1 includes a first surface 601 having an operation portion 11 placed thereon, and a second surface 602 positioned on a side opposite to first surface 601. Turn table 500 is provided on first surface 601.

Second cabinet 2 includes a third surface 603 having a display portion 21 provided thereon, and a fourth surface 604 positioned on a side opposite to third surface 603. If second cabinet 2 is rotated toward first cabinet 1 from the position illustrated in Fig. 70, this brings third surface 603 into contact with first surface 601.

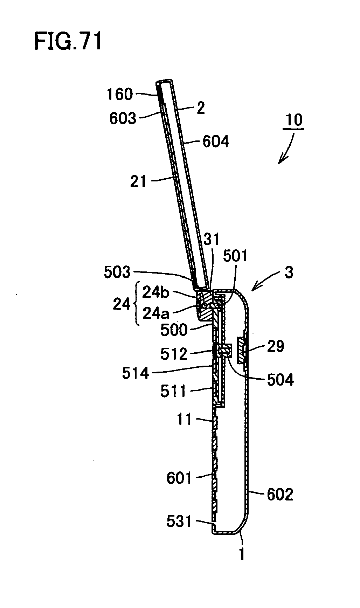

Fig. 71 is a cross-sectional view taken along the line LXXI-LXXI in Fig. 70. Referring to Fig. 71, first cabinet 1 and second cabinet 2 of portable information terminal 10 have hollow configurations. A camera 29 is placed in first cabinet 1 in its second surface 602. Turn table 500 is provided in a flat plate shape on first surface 601. Turn table 500 can be rotated about a rotation shaft 504. Another rotation shaft 501 is placed in turn table 500. Rotation shaft 501 is integral with rotation shaft 31. Rotation shaft 31 is rotatable about rotation shaft 501 on turn table 500. Since second cabinet 2 is attached to rotation shaft 31, second cabinet 2 can be rotated on turn table 500. Another rotation shaft 503 is provided such that it extends in a direction orthogonal to the direction of extension of rotation shaft 31. Rotation shaft 503 is a shaft which serves as the center of rotation of second cabinet 2. Namely, second cabinet 2 can be rotated in two directions about two rotation shafts 501 and 503 which are orthogonal to each other. If second cabinet 2 is rotated about rotation shaft 503 in the state illustrated in Fig. 71, this brings third surface 603 into contact with first surface 601. On the contrary, if second cabinet 2 is rotated about rotation shaft 501, this brings fourth surface 604 into contact with first surface 601.

Namely, any of third surface 603 and fourth surface 604 can be brought into contact with first surface 601. Rotation shaft 504 is held in first cabinet 1 and serves as the center of rotation of turn table 500. Also, a thrust bearing can be provided between first cabinet 1 and turn table 500, in order to reduce the contact resistance during rotation.

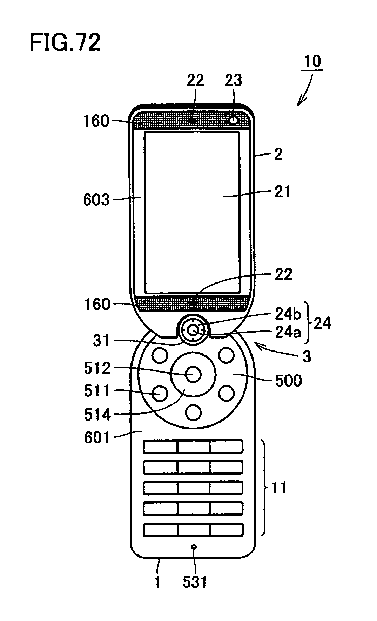

Fig. 72 is a front view of the portable information terminal which is viewed in the direction designated by an arrow LXXII in Fig. 70. Referring to Fig. 72, turn table 500 has a disk shape, wherein determination key 512 is placed at the center thereof and search key 514 is placed to surround determination key 512. Around search key 514, there are concentrically provided five function keys 511. The respective function keys 511 have different functions. For example, a function key 511 can be adapted such that, if it is pushed, this causes transmission or reception of a mail.

In the area surrounded by rotation shaft 31, there is placed operation key 24 constituted by determination key 24a and search key 24b. Further, while, in the present embodiment, operation key 24 is placed on rotation shaft 31, the placement of operation key 24 is not limited thereto, but operation key 24 can be placed in second cabinet 2. If turn table 500 is rotated about determination key 512, this causes second cabinet 2 held on turn table 500 to rotate about determination key 512.

Further, second cabinet 2 can be rotated about rotation shaft 31. A microphone 531 is provided in first cabinet 1 for receiving voices of the operator.

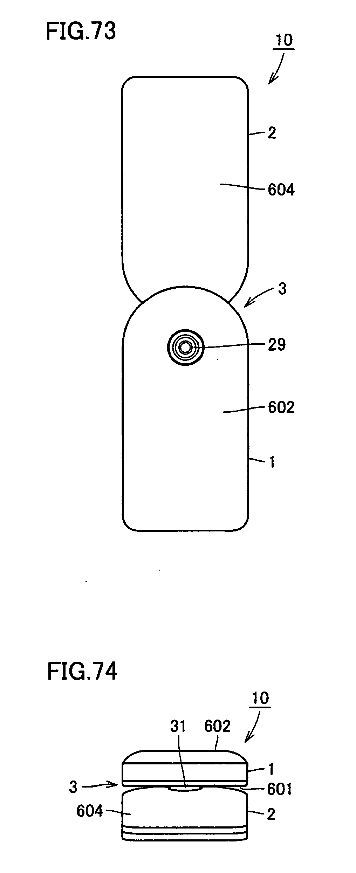

Fig. 73 is a rear view of the portable information terminal, when viewed from the direction designated by an arrow LXXIII in Fig. 70. Referring to Fig. 73, second surface 602 and forth surface 604 are provided on the bask side of portable information terminal 10. A camera 29 is provided on second surface 602 and is capable of shooting videos near second surface 602. First cabinet 1 and second cabinet 2 have symmetrical shapes and are shaped to be curved around rotational coupling mechanism 3.

Fig. 74 is a plan view of the portable information terminal, when viewed in the direction designated by an arrow LXXIV in Fig. 70. Referring to Fig. 74, when portable information terminal 100 is viewed from above, fourth surface 604 of second cabinet 2 appears. Second cabinet 2 is positioned to sandwich rotation shaft 31 and is rotatable about rotation shaft 31. In first cabinet 1, first surface 601 is positioned near second cabinet 2, while second surface 602 is positioned on the side distant from second cabinet 2.

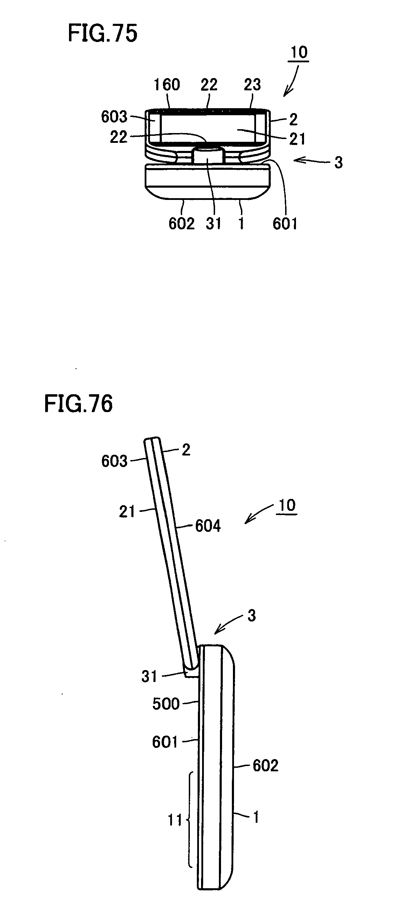

Fig. 75 is a bottom view of the portable information terminal, when viewed in the direction designated by an arrow LXXV in Fig. 70. Referring to Fig. 75, when portable information terminal 10 is viewed from below, rotation shaft 31 extends to protrude from first cabinet 1. Rotation shaft 31 extends so as to protrude from first surface 601, and second cabinet 2 is attached to rotation shaft 31. Second cabinet 2 is placed to be inclined with respect to rotation shaft 31, and display portion 21 is provided at the center portion thereof Display portion 21 is placed on third surface 603.

Fig. 76 is a right side view of the portable information terminal, when viewed in the direction designated by an arrow LXXVI in Fig. 70. Referring to Fig. 76, when portable information terminal 10 is viewed from a side surface thereof, it can be seen that first surface 601, second surface 602, third surface 603 and fourth surface 604 are substantially planar surfaces. However, it is not necessarily necessary that first surface 601, second surface 602, third surface 603 and fourth surface 604 are planer surfaces, but they can be curved surfaces.

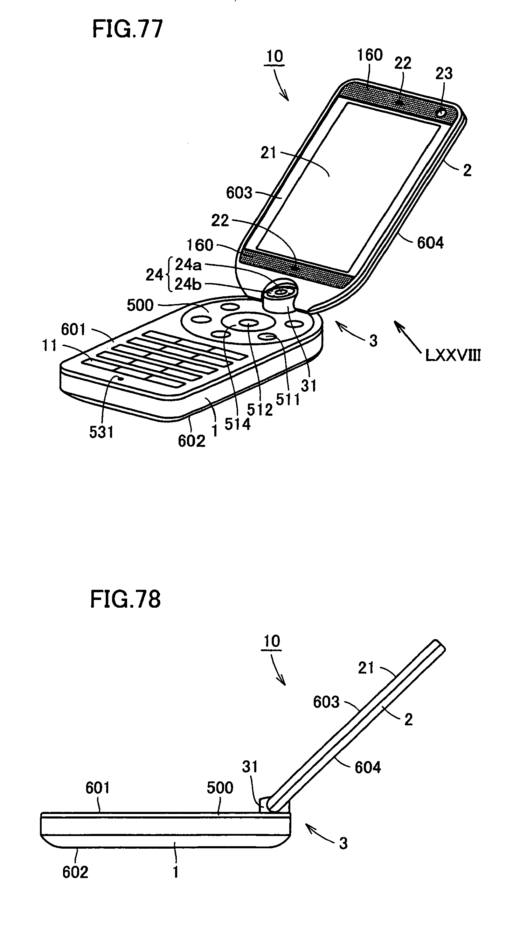

Fig. 77 is a perspective view of the portable information terminal, in a state where second cabinet 2 has been rotated with respect to first cabinet 1. Referring to Fig. 77, in portable information terminal 10, second cabinet 2 can be rotated with respect to first cabinet 1. Namely, at the position illustrated in Fig. 77, the angle between first cabinet 1 and second cabinet 2 is different from that at the position illustrated in Fig. 70. The operator can easily recognize the image displayed on display portion 21, by adjusting the angle between first cabinet 1 and second cabinet 2 according to the state of operator's operations. Also, the operator can adjust the angle of second cabinet 2, when he or she shoots with camera 23.

Fig. 78 is a side view of the portable information terminal, when viewed in the direction designated by an arrow LXXVIII in Fig. 77. Referring to Fig. 78, when portable information terminal 10 is viewed from a side surface thereof, it can be seen that second cabinet 2 is inclined more sharply with respect to first cabinet 1. In this state, for example, the operator can receive television videos by portable information terminal 10 and display them on display portion 21 for viewing the videos. Further, the position of second cabinet 2 is not limited to the position illustrated in Fig. 78, but second cabinet 2 can be positioned at various angles, since second cabinet 2 can be continuously rotated with respect to first cabinet 1.

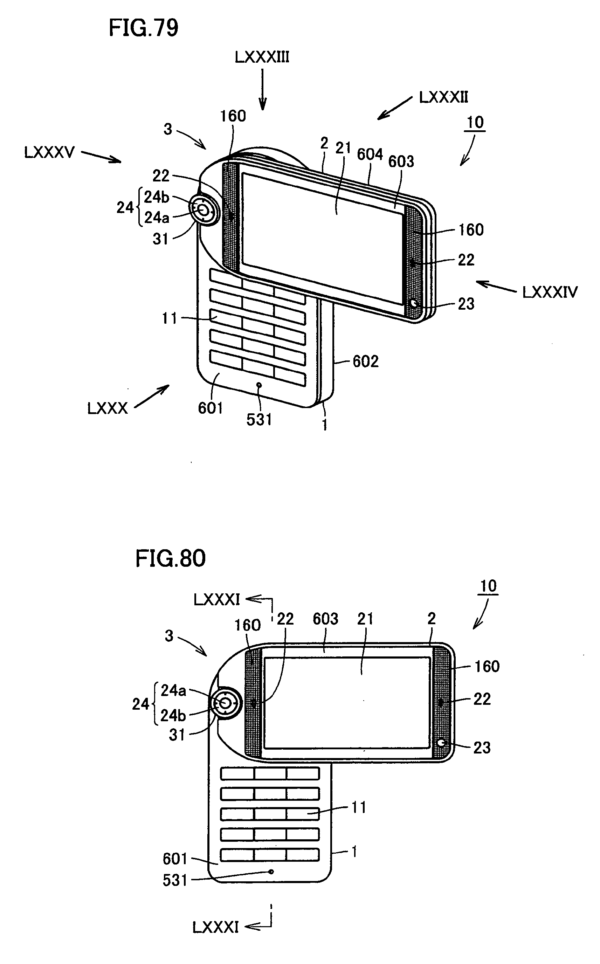

Fig. 79 is a perspective view of the portable information terminal, in a state where the turn table has been rotated. Referring to Fig. 79, rotation shaft 31 provided on the turn table can be rotated about the turn table. Namely, while rotation shaft 31 is positioned at the upper end portion of first cabinet 1 in Fig. 77, rotation shaft 31 has been rotated together with the turn table, and rotation shaft 31 is positioned on the left side of first cabinet 1 in Fig. 79. Along therewith, second cabinet 2 attached to rotation shaft 31 is also held on the left side of first cabinet 1. While rotation shaft 31 is positioned on the left side of first cabinet 1 in Fig. 79, the position of rotation shaft 31 is not limited to the aforementioned position, but rotation shaft 31 can be positioned on the right side of first cabinet 1.

Portable information terminal 10 has an L shape in its entirety, and display portion 21 forms a horizontally-longer screen. Therefore, the video to be displayed on display portion 21 is displayed such that it is adaptable to the horizontally-longer screen. Namely, if second cabinet 2 is rotated from the position illustrated in Fig. 77 to the position illustrated in Fig. 79, this causes the way of displaying an image thereon to be changed over. This changeover is performed by a control mechanism provided within portable information terminal 10. By rotating the turn table, it is possible to change the overlapped areas of first cabinet 1 and second cabinet 2 in a continuous manner. Namely, in a state where portable information terminal 10 has an L-shape (in a state where display portion 21 is oriented laterally), by rotating the turn table, it is possible to change, in a continuous manner, the overlapped areas of first cabinet 1 and second cabinet 2.

Fig. 80 is a front view of the portable information terminal, when viewed in the direction designated by an arrow LXXX in Fig. 79. Referring to Fig. 80, second cabinet 2 is placed to extend in the direction orthogonal to first cabinet 1. Speaker portions 160 are provided on the opposite sides of horizontally-longer display portion 21, and these speaker portions 160 can form stereo speakers. In the state illustrated in Fig. 80, the turn table and the function keys, the determination key and the search key provided thereon are covered with second cabinet 2. In this state, the function keys and the like are prevented from being pushed, which can prevent false operations. Namely, at an operation mode which requires prevention of false operations, it is preferable that the turn table is covered with second cabinet 2, as illustrated in Fig. 80.

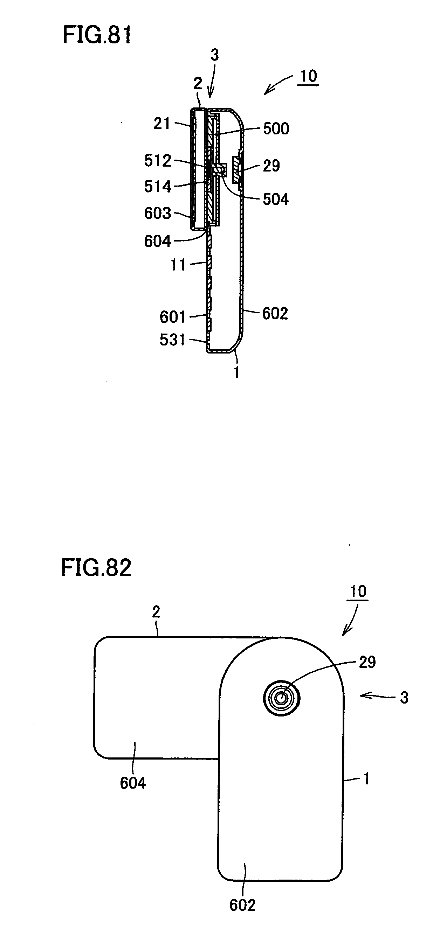

Fig. 81 is a cross-sectional view taken along the arrow and line LXXXI-LXXXI in Fig. 80. Referring to Fig. 81, turn table 500 provided on first cabinet 1 is covered with fourth surface 604 of second cabinet 2. At the same time, determination key 512 and search key 514 on turn table 500 are also covered with second cabinet 2. Operation portion 11 is embedded in first surface 601, in order to prevent it from hindering the rotation of second cabinet 2. In the state illustrated in Fig. 81, display portion 21 in second cabinet 2 is exposed on the outer surface, which enables the operator to recognize the video being displayed on display portion 21.

Fig. 82 is a rear view of the portable information terminal, when viewed in the direction designated by an arrow LXXXII in Fig. 79. Referring to Fig. 82, when the portable information terminal is viewed from the rear side, second surface 602 and fourth surface 604 of portable information terminal 10 appear. Camera 29 is provided in second surface 602. The upper end portion of second cabinet 1 is coincident with a longer side of second cabinet 2. This is an effect provided by rotating the turn table.

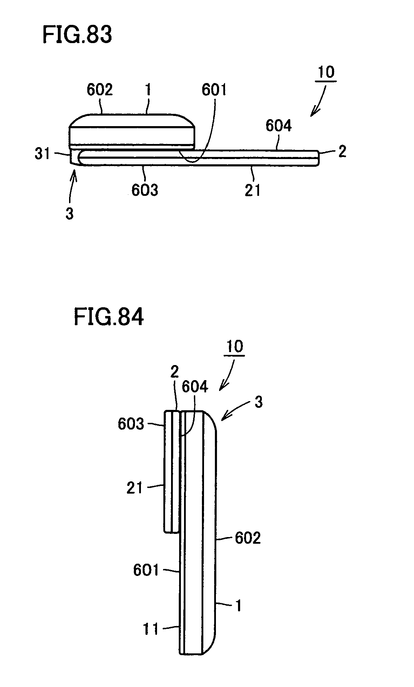

Fig. 83 is a plan view of the portable information terminal, when viewed in the direction designated by an arrow LXXXIII in Fig. 79. Referring to Fig. 83, when portable information terminal 10 is viewed from above, second cabinet 2 extends lengthwise in the horizontal direction. Fourth surface of 604 of second cabinet 2 and first surface 601 of first cabinet 1 are faced to each other and placed such that they can slide while being in contact with each other.

Fig. 84 is a right side view of the portable information terminal, when viewed in the direction designated by an arrow LXXXIV in Fig. 79. Referring to Fig. 84, when portable information terminal 10 is viewed from its right side surface, first cabinet 1 appears in a vertically-longer shape. Second cabinet 2 is provided such that it is in contact with first cabinet 1, and a shorter side of second cabinet 2 appears on the right side surface.

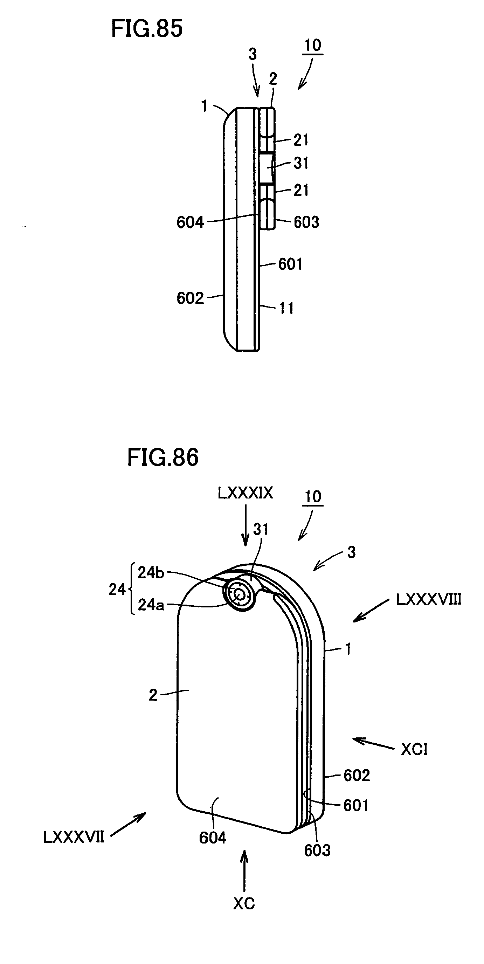

Fig. 85 is a left and right side view of the portable information terminal, when viewed in the direction designated by an arrow LXXXV in Fig. 79. Referring to Fig. 85, when portable information terminal 10 is viewed from the left side surface, rotation shaft 31 1 of portable information terminal 1 appears. With portable information terminal 1, by rotating the turn table, it is possible to place rotation shaft 31 which holds second cabinet 2 at various positions between the upper end portion of first cabinet 1 and the center portion thereof. Accordingly, second cabinet 2 can be supported at different positions, which enables changing the position of second cabinet 2 relative to first cabinet 1. By properly changing, through the aforementioned operations, the position of first cabinet 1 and second cabinet 2 to a position which enables the operator to hold them easily, it is possible to improve the usability of the portable information terminal.

Fig. 86 is a perspective view of the portable information terminal in a state where the cover is closed. Referring to Fig. 86, second cabinet 2 as a cover can be closed. In the state illustrated in Fig. 86, third surface 603 of second cabinet 2 and first surface 601 of first cabinet 1 are faced to each other. However, their positions are not limited thereto, but fourth surface 604 can be faced to first surface 601. In the state illustrated in Fig. 86, fourth surface 604 is positioned on the outer surface side, while third surface 603 is positioned on the inner surface side. Third surface 603 is provided with the display portion, and this display portion is also positioned on the inner surface side. This can protect the display portion.

On the contrary, it second cabinet 2 is positioned such that its third surface 603 is positioned on the outer surface side, this enables the operator to recognize information displayed on the display portion provided on third surface 603, even in the state where the cover is closed. Accordingly, by displaying some information such as time information, it is possible to enable the operator to recognize the time, even in the state where the cover is closed.

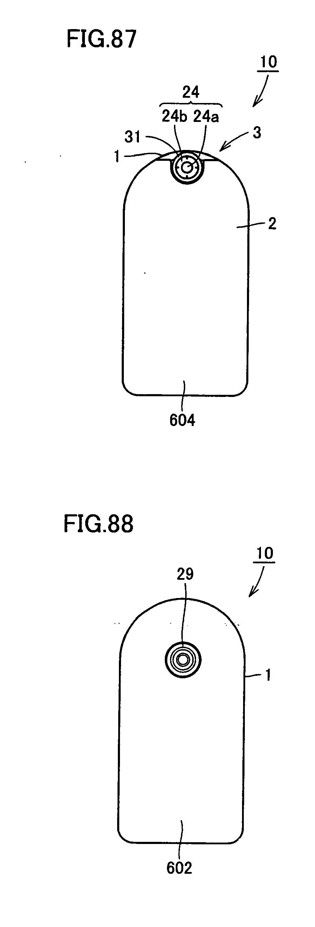

Fig. 87 is a front view of the portable information terminal, when viewed in the direction designated by an arrow LXXXVII in Fig. 86. Referring to Fig. 87, when second cabinet 2 as a cover is closed in portable information terminal 10, first cabinet 1 and second cabinet 2 are overlapped with each other and, thus, portable information terminal 10 is in a compact state. This enables the operator to house portable information terminal 10 easily. Further, in the state illustrated in Fig. 87, forth surface 604 of second cabinet 2 which does not have the display portion forms an outer surface, which can prevent the display portion from being damaged.

Even in the state where the cover is closed as illustrated in Fig. 87, operation key 24 constituted by determination key 24a and search key 24b is exposed on the outer surface. Portable information terminal 10 can be configured such that, in the state where the cover is closed, it can be never activated even if operation key 24 is operated. Also, unlike this, portable information terminal 10 can be configured such that any of the functions of portable information terminal 10 can be activated by operating operation key 24. For example, portable information terminal 10 can be configured such that videos can be shot with camera 29 (Fig. 88) by operating operation key 24.

Fig. 88 is a rear view of the portable information terminal, when viewed in the direction designated by an arrow LXXXVIII in Fig. 86. Referring to Fig. 88, in the state where the cover is closed, only first cabinet 1 in portable information terminal 10 appears when portable information terminal 10 is viewed from the back side. This is because second cabinet 2 and first cabinet 1 have substantially the same plane area, and second cabinet 2 is positioned behind first cabinet 1. On the back surface side, second surface 602 of first cabinet 1 is exposed, and camera 29 is placed in second surface 602.

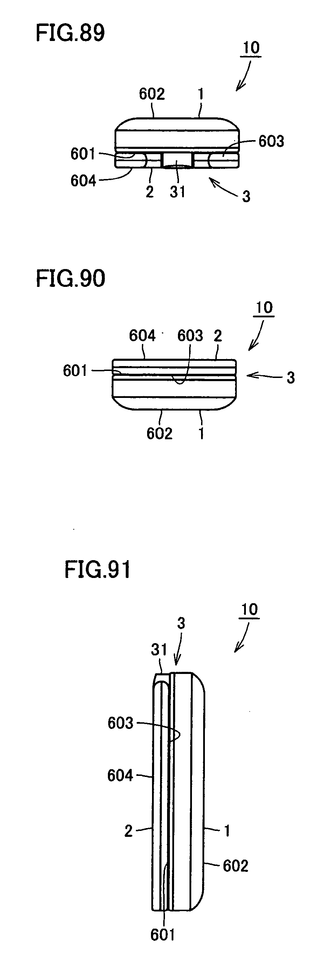

Fig. 89 is a plan view of the portable information terminal, when viewed in the direction designated by an arrow LXXXIX in Fig. 86. Referring to Fig. 89, when portable information terminal 10 is viewed from above, first cabinet 1, second cabinet 2 and rotation shaft 31 which couples them appear. First surface 601 of first cabinet 1 is in intimate contact with third surface 603 of second cabinet 2. Second surface 602 of first cabinet 1 and fourth surface 604 of second cabinet 2 constitute the outer surface of portable information terminal 10.

Fig. 90 is a bottom view of the portable information terminal, when viewed in the direction designated by an arrow XC in Fig. 86. Referring to Fig. 90, when portable information terminal 10 is viewed from the bottom surface, similarly to in Fig. 89, first surface 601 of first cabinet 1 and third surface 603 of second cabinet 2 which are in contact with each other appear. The sum of the thicknesses of first cabinet 1 and second cabinet 2 becomes the thickness of portable information terminal 10.

Fig. 91 is a right side view of the portable information terminal, when viewed in the direction designated by an arrow XCI in Fig. 86. Referring to Fig. 91, in the right side view, first cabinet 1 and second cabinet 2 of portable information terminal 10 extend in the longitudinal direction. Rotation shaft 31 is provided at the end portion of portable information terminal 10 from which it extends in the longitudinal direction. Second cabinet 2 is rotatable with respect to first cabinet 1 about rotation shaft 31, and Fig. 9 illustrates the state where second cabinet 2 has been rotated to be overlapped with first cabinet 1.

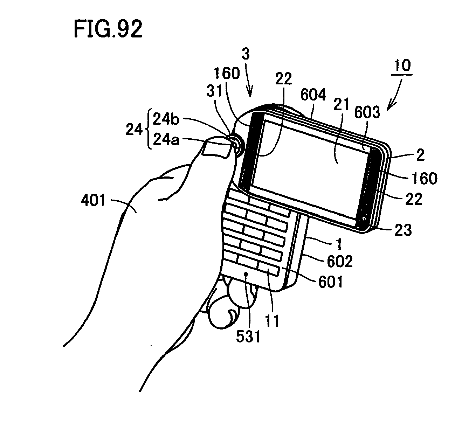

Fig. 92 is a perspective view of the portable information terminal, at a first usage state. Referring to Fig. 92, at the first usage state, operation key 24 is positioned on the left-hand side of portable information terminal 10, and second cabinet 2 forms a horizontally-longer screen. In this case, operator 401 can operate operation key 24 with his or her left thumb. This operation is particular advantageous for a left-handed operator 401. The image to be displayed is changed over according to the horizontally-longer display portion 21. By pushing operation portion 11 constituted by operation keys, a menu provided on operation portion 11 can be selected. By pushing search key 24b and determination key 24a constituting operation key 24, display items on operation portion 11 can be properly selected. In the state illustrated in Fig. 92, determination key 512, search key 514 and function keys 511 provided on the turn table are covered with second cabinet 2.

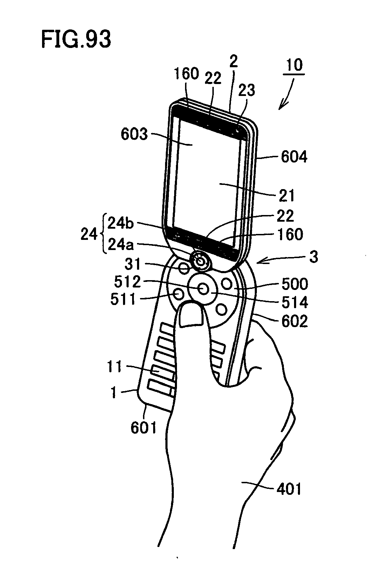

Fig. 93 is a perspective view of the portable information terminal, at a second usage state. Referring to Fig. 93, at the second usage state, first cabinet 1 and second cabinet 2 constituting portable information terminal 10 are placed along a single straight line. Rotation shaft 31 is positioned at the upper end portion of first cabinet 1. Accordingly, determination key 512, search key 514 and function keys 511 on turn table 500 are exposed. Operator 401 can push determination key 512, search key 514 and function keys 511 on turn table 500, as required. Also, operator 401 can push determination key 24a and search key 24b constituting operation key 24. In the state illustrated in Fig. 93, operator 401 can push the respective keys with his or her right hand or left hand.

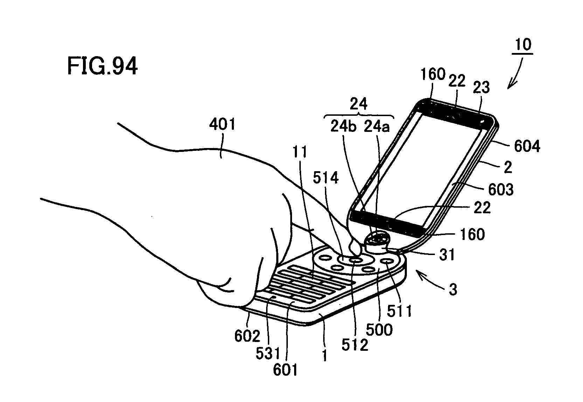

Fig. 94 is a perspective view of the portable information terminal, at a third usage state. Referring to Fig. 94, at the third usage state, portable information terminal 10 can be placed on a predetermined surface, such as on a desk, in Fig. 94, and operator 401 can push various keys on portable information terminal 10 in this state. For example, operator 401 can receives a live telecast by portable information terminal 10, then can display the videos thereof on display portion 21 and can push keys as required. Operator 401 can push a proper search key for changing over the television screen.

The portable information terminal according to the sixth embodiment of the present invention includes first cabinet 1 having first surface 601 and second surface 602 positioned on the side opposite to first surface 601, second cabinet 2 having third surface 603 and fourth surface 604 positioned on the side opposite to third surface 603 and being partially overlapped with first cabinet 1, rotational coupling mechanism 3 as a first rotational coupling mechanism which couples first and second cabinets 1 and 2 to each other such that second cabinet 2 can be rotated relative to first cabinet 1, and turn table 5 as a second coupling mechanism which couples rotational coupling mechanism 3 to first cabinet 1 such that rotational coupling mechanism 3 can be rotated relative to first cabinet 1. Turn table 500 holds second cabinet 2 such that third surface 603 and fourth surface 604 can be faced to first surface 601.

With portable information terminal 10 having the aforementioned configuration, rotation shaft 31 is provided on rotatable turn table 500, which enables changing the position of second cabinet 2 relative to first cabinet 1 as required, thereby improving the usability of the portable information terminal.

### (Seventh Embodiment)

In the seventh embodiment, there will be described changing over of the speakers, in the event of arrival of an incoming call during replaying of an AV content. In the event of arrival of an incoming call during replaying of an AV (audio visual) content on display portion 21, it is possible to take three measures as follows; (A) maintaining the current volume of AV sounds, (B) reducing the volume of AV sounds, and (C) turning off the volume of AV sounds.

Also, in order to notify the viewer of the arrival of the incoming call, it is possible to take three measures as follows; (i) displaying an incoming-call screen on the screen of display portion 21, (ii) generating an incoming-call sound, and (iii) generating an incoming-call sound while displaying an incoming-call screen on the screen of display portion 21.

Further, as the timing of (B) reducing the volume of AV sounds or (C) turning off the volume of AV sounds as changing over, it is possible to take two measures as follows; (1) changing over the speakers at the time when the viewer approaches portable information terminal 10 to an ear of the viewer and a sensor detects that, and (2) changing over the speakers forcibly at the time of arrival of an incoming call.

Accordingly, it is possible to employ arbitrarily combinations. More specifically, it is possible to employ the following 21 combinations; (A)-(i), (A)-(ii), (A)-(iii), (B)-(i), (B)-(ii), (B)-(iii), (C)-(i), (C)-(ii), (C)-(iii), (B)-(i)-(1), (B)-(i)-(2), (B)-(ii)-(1), (B)-(ii)-(2), (B)-(iii)-(1), (B)-(iii)-(2), (C)-(i)-(1), (C)-(i)-(2), (C)-(ii)-(1), (C)-(ii)-(2), (C)-(iii)-(1) and (C)-(iii)-(2).

While there have been described the embodiments of the present invention, it is possible to made various changes to the embodiments which have been described herein. Also, it is possible to place a slot in the aforementioned portable information terminals for attaching an external storage medium such as a memory card for storing data in first cabinet 1 and second cabinet 2. In this case, it is possible to store, in this storage medium, videos shot with the camera or images received by the antenna.

Also, it is possible to provide a terminal (interface) for enabling connection to another information terminal. Also, in the embodiments, in case of providing a flash in combination with the camera, it is possible to employ, as the flash, a light-emitting diode or a strobe light using xenon.

Further, display portion 21 can have a longer-side-to-shorter-side ratio (dimension ratio) of 16:9 or 3:4. Also, display portion 21 can be a touch panel which enables operations for the television (changing of the channel, the volume, the screen contrast, changing of the screen, changing of screen sounds, and the like) and/or operations for the telephone. Also, the surface thereof can be covered with a toughened glass such as a sapphire glass.

Also, display portion 21 can be configured to be capable of multi-screen display (split screen display, such as two-part split screen, three-part split screen and four-part split screen and the like), as well as single-part split screen display. In the case of multi-screen display, the single display portion 21 can display a combination of a television screen, an electronic program guide (EPG) screen, a game screen, a mail screen, with multi-screen displaying. This enables reading mails, creating mails, returning mails, reserving programs, playing games while watching the television. This enables the operator to process plural information at the same time.

Also, portable information terminal 10 can have a television-program recording function and also can have a non-contact electronic payment function and a personal authentication function. Particularly, in the case of using such a non-contact electronic payment function, it is preferable to enable reorganization of various types of information (ride intervals, ticket information, fares and barcodes) necessary for electronic payment, in the state where portable information terminal 10 is closed. Accordingly, portable information terminals 10 according to the present embodiments are particularly suitable for such applications. Also, in the case of offering such a non-contact electronic payment function and such a personal authentication function, it is preferable to configure portable information terminals 10 to enable attaching an IC (Integrated Circuit) card such as an SIM (Subscriber Identity Module) card therein.

Further, while the portable information terminals are cellular phones, but the portable information terminals are not limited thereto. The portable information terminals can also be notebook personal computers, digital cameras capable of communications, and the like. Further, preferably, the portable information terminals have communication functions.

Further, in the case of utilizing the portable information terminals as cellular phones, it is possible to employ, as their antennas, various types of antennas such as a single monopole antenna, a helical antenna, a meander line antenna, a plate antenna.

It is to be understood that the embodiments which have been described are merely illustrative, not restrictive, in all respects. The scope of the present invention is defined by the claims, not limited by the preceding description, and also is intended to cover equivalents to the claims and all changes which fall within the claims.

### Industrial Applicability

The present invention is applicable to the field of portable information terminals.

## Claims

1. A portable information terminal comprising:
a first cabinet (1) having an operation portion (11);
a second cabinet (2) having a display portion (21) and being partially overlapped with said first cabinet (1); and
a rotational coupling mechanism (3) for coupling said first and second cabinets to each other such that said second cabinet (2) can be rotated with respect to said first cabinet (1); wherein
a center (31) of said rotation is substantially coincident with a center (C) of a overlapped portion (4) of said first and second cabinets.

2. A portable information terminal comprising:
a first cabinet (1) having an operation portion (11);
a second cabinet (2) having a display portion (21) and being partially overlapped with said first cabinet (1); and
a rotational coupling mechanism (3) for coupling said first and second cabinets to each other such that said second cabinet (2) can be rotated with respect to said first cabinet (1); wherein
said second cabinet (2) has an operation key (24) placed on said first cabinet for selecting display items on said display portion.

3. A portable information terminal comprising:
a first cabinet (1) having an operation portion (11);
a second cabinet (2) having a display portion (21) and being partially overlapped with said first cabinet (1); and
a rotational coupling mechanism (3) for coupling said first and second cabinets to each other such that said second cabinet (2) can be slid and rotated with respect to said first cabinet (1).

4. A portable information terminal comprising:
a first cabinet (1) having an operation portion (11);
a second cabinet (2) having a display portion (21) and being partially overlapped with said first cabinet (1);
a rotational coupling mechanism (3) for coupling said first and second cabinets to each other such that said second cabinet (2) can be rotated with respect to said first cabinet (1); and
a strap portion (301) provided on at least one of said first and second cabinets on a surface opposite to the display portion, wherein
said strap portion (301) engages with a hand of an operator (401) in a state where the operator grasps said portable information terminal, and
said strap portion comes into contact with a placement surface (302) for supporting said portable information terminal in a state where said portable information terminal is placed on the placement surface (302).

5. A portable information terminal comprising:
a first cabinet (1) having an operation portion (11);
a second cabinet (2) having a display portion (21) and being partially overlapped with said first cabinet (1);
a rotational coupling mechanism (3) for coupling said first and second cabinets to each other such that said second cabinet (2) can be rotated with respect to said first cabinet (1);
stereo speakers (161 to 164) provided in said second cabinet (2) on opposite sides of said display portion (21); and
a control portion (121) for changing over a stereo replaying condition of said stereo speakers according to a state of display of an image on said display portion.

6. A portable information terminal comprising:
a first cabinet (1) having an operation portion (11);
a second cabinet (2) having a display portion (21) and being partially overlapped with said first cabinet (1);
a rotational coupling mechanism (3) for coupling said first and second cabinets to each other such that said second cabinet (2) can be rotated with respect to said first cabinet (1); and
an image pickup portion (23) having substantially a same thickness as a sum of thicknesses of said first and second cabinets being overlapped with each other and housed in said second cabinet (2).

7. A portable information terminal comprising:
a first cabinet (1) having a first surface (601) and a second surface (602) positioned on a side opposite to the first surface (601);
a second cabinet (2) having a third surface (603) and a fourth surface (604) positioned on a side opposite to the third surface (603) and being partially overlapped with said first cabinet (1);
a first rotational coupling mechanism (3) holding said second cabinet such that said second cabinet (2) can be rotated with respect to said first cabinet (1); and
a second rotational coupling mechanism (500) for coupling said first rotational coupling mechanism (3) to said first cabinet (1) such that the first rotational coupling mechanism (3) can be rotated with respect to the first cabinet, wherein
said first rotational coupling mechanism (3) holds said second cabinet (2) such that said third surface (603) and said fourth surface (604) can be faced to said first surface.

8. The portable information terminal according to claim 1, wherein
said second cabinet (2) can be rotated in said first direction and a second direction different from said first direction, from a state where said first and second cabinets are arranged along a single straight line.

9. The portable information terminal according to claim 1, capable of receiving ground-wave digital broadcasting to display on the display portion.
